# EUROPÄISCHE PATENTSCHRIFT

(11) **EP 1 562 775 B1**
(45) Veröffentlichungstag und Bekanntmachung des Hinweises auf die Patenterteilung: **17.05.2006**
(21) Anmeldenummer: 03778326.3
(22) Anmeldetag: 20.11.2003
(51) Int. Cl.: B60K 31/00, G08G 1/16

(54) **SYSTEM ZUR BEEINFLUSSUNG DER GESCHWINDIGKEIT EINES KRAFTFAHRZEUGES**
SYSTEM FOR INFLUENCING THE SPEED OF A MOTOR VEHICLE
SYSTEME POUR INFLUER SUR LA VITESSE D'UNE AUTOMOBILE

(30) Priorität: 21.11.2002 DE 10254421
(43) Veröffentlichungstag der Anmeldung: 17.08.2005
(73) Patentinhaber: Lucas Automotive GmbH, 56070 Koblenz (DE)
(72) Erfinder: SCHRÖDER, Marko, 56075 Koblenz (DE)
(74) Vertreter: Schmidt, Steffen J.
(86) Internationale Anmeldenummer: PCT/EP2003/013026
(87) Internationale Veröffentlichungsnummer: WO 2004/045887

(56) Entgegenhaltungen:
- EP-A- 0 928 714
- WO-A-95/14939
- DE-A- 4 446 859
- DE-A- 19 821 163
- US-A- 6 076 034
- US-A1- 2002 049 539
- US-A1- 2002 128 751

## Beschreibung

### Hintergrund der Erfindung

Die Erfindung betrifft ein System zur Beeinflussung der Geschwindigkeit eines Kraftfahrzeuges (KFZs). Derartige Steuerungen werden unter der Bezeichnung ACC (Autonomous/ Adaptive - Cruise Control) vermehrt in Kraftfahrzeugen, insbesondere PKW der Oberklasse und oberen Mittelklasse eingesetzt.

### Stand der Technik

Es sind Einrichtungen bekannt, welche die Fahrtgeschwindigkeit eines KFZs regeln, wobei der Fahrer eine Wunschgeschwindigkeit vorgeben kann und durch einen Geschwindigkeitsregler die Fahrtgeschwindigkeit des KFZs auf diese Zielgeschwindigkeit gebracht und dort gehalten wird, solange diese Einrichtung aktiviert ist. Allerdings findet hierbei keine Überwachung der Fahrtgeschwindigkeit eines vorausfahrenden KFZs statt. Daher muss der Fahrer eingreifen wenn sich sein eigenes KFZ dem vorausfahrenden KFZ zu sehr nähert. Gleichermaßen kann der Fahrer aber auch bei einer Erhöhung der Geschwindigkeit des vorausfahrenden KFZs die Geschwindigkeit seines eigenen KFZs entsprechend erhöhen.

DE 198 21 163 offenbart eine Einrichtung die dem Fahrer die Überwachung des Abstandes zum vorausfahrenden KFZ abnimmt und die Geschwindigkeit seines eigenen Kfzs an die Geschwindigkeit eines vorausfahrenden Kfzs angepasst. Mittels eines GPS-Systems wird eine momentane Position des Kraftfahrzeuges festgestellt. Anhand dieser Positionsdaten ermittelt der Prozessor aus den Daten in dem Landkartenspeicher auf welcher Verkehrswegeart (Stadtverkehr, Landstrasse, Autobahn) sich das Fahrzeug momentan befindet. Alternativ oder zusätzlich ist ferner eine direkte Eingabe durch einen Fahrer des Kraftfahrzeuges vorgesehen. Hierzu ist beispielsweise eine entsprechende manuell bedienbare Eingabevorrichtung angeordnet, welche eine manuelle Eingabe des Fahrer beispielsweise bzgl. einer Verkehrswegeart, welche momentan befahren wird zulässt wie beispielsweise "Autobahn", "Landstrasse" oder "Stadt". Die Grenzen zwischen den unterschiedlichen Verkehrsarten sind hier fest.

### Der Erfindung zugrunde liegendes Problem

Um derartige ACC-Systeme mit Erfolg einem breiteren Einsatz zuzuführen, ist ein sicherer und zuverlässigerer Betrieb dieser Systeme erforderlich, der auch in höherem Fahrkomfort und damit einer gesteigerten Akzeptanz bei den Fahrern resultiert. Insbesondere befasst sich die Erfindung mit dem Problem, die Auswahl des Ziel-KFZs zu verbessern und damit das Fahrverhalten des eigenen KFZs sicherer zu gestalten.

### Erfindungsgemäße Lösung

Das obengenannte Problem wird gemäß des Anspruchs 1 gelöst.

### Erfindungsgemäße Ausgestaltungen und vorteilhafte Weiterbildungen

Die Funktion eines ACC-System der erfindungsgemäßen Art beruht darauf, dass an der Frontpartie des eigenen KFZs ein in der Regel starr nach vorne orientierter Sensor, meist ein Radarsensor, mit einem relativ schmalen Erfassungsbereich angeordnet ist. Dieser Sensor dient dazu, in dem Erfassungsbereich befindliche Objekte zu detektieren und an eine elektronische Steuereinheit (mit Abstand und Seitenablage oder Winkellage zur Mittelachse des Sensors bzw. des KFZs, sowie ggf. die Größe des Objektes) zu melden. Aus diesen Daten sowie aus einigen anderen, im eigenen KFZ gewonnenen Daten (Geschwindigkeit, Dreh- oder Gierrate um die Hochachse des eigenen KFZs, Querbeschleunigung des eigenen KFZs etc.) wird dann in der elektronischen Steuereinheit zunächst die Fahrspur oder der Fahrkorridor des eigenen KFZs ermittelt. Basierend hierauf wird dann nach bestimmten Kriterien ein, in der Regel das nächstliegende KFZ im eigenen Fahrkorridor als vorausfahrendes Ziel-KFZs ermittelt um auf dieses KFZ den Abstand durch Eingriff in die Motorsteuerung, die Getriebesteuerung und das Bremssystem zu regeln. Damit ist es dem eigenen KFZ möglich, einem vorausfahrenden Fahrzeug mit einem (ggf. von der Geschwindigkeit und anderen Faktoren abhängigen) Sicherheitsabstand zu folgen, wobei die Festlegung und Einhaltung des Sicherheitsabstandes durch vom Fahrer unabhängige Eingriffe in das Motorsteuerungssystem und in das Bremssystem des eigenen KFZs vorgenommen wird. Der Fahrer gibt in der Regel nur eine Wunschgeschwindigkeit des eigenen KFZs und/oder einen Wunschabstand des eigenen KFZs von einem ZieIKFZ vor. Mit anderen Worten stellt die Erfindung ein System zur Auswertung der Fahrumgebung eines KFZs und zur Beeinflussung der Geschwindigkeit des KFZs bereit. Dieses System hat eine elektronische Steuereinheit, die mit einem ein für die Wunschgeschwindigkeit / Wunschabstand des KFZs charakteristisches Signal erzeugenden Signalgeber verbunden ist. Außerdem wird der elektronischen Steuereinheit die momentane (Ist-)Geschwindigkeit des eigenen KFZs zugeführt. Außerdem ist die elektronische Steuereinheit mit einem ein für die Drehrate des KFZs um dessen Hochachse charakteristisches Signal erzeugenden Signalgeber verbunden. Weiterhin ist die elektronische Steuereinheit mit einem Signalgeber verbunden, der für in dem in Fahrtrichtung des KFZs vor dem KFZs liegenden Raum befindliche Objekte hinsichtlich deren Abstand und Orientierung zu dem KFZ charakteristisches Signal erzeugt. Hierbei kann es sich um einen Radarsensor, einen Ultraschall-, oder Infrarotsensor, aber auch um ein Bildsensor (Videokamera) handeln. Der mit dem Sensor abgetastete Raum ist etwa Kegel- oder keulenförmig und hat abhängig von den tatsächlichen Umgebungs-Gegebenheiten eine Länge von etwa 100 - 250 Metern und einen Öffnungswinkel von etwa 12°. Eine sichere Erfassung/Auswahl kann damit für Objekte erfolgen, die sich im Abstand von etwa 170 +/- 30 Metern vom eigenen KFZ entfernt befinden bzw. vor diesem sich innerhalb dieses Bereiches bewegen. Schließlich ist die elektronische Steuereinheit mit einem ein für die Geschwindigkeit wenigstens eines Rades des KFZs charakteristisches Signal erzeugenden Signalgeber verbunden. Dies kann zum Beispiel der Drehzahlgeber des Anti-Blockier-Systems (ABS) sein. In der elektronischen Steuereinheit werden die Signale aus diesen Signalgebern mittels einer oder mehreren Rechnereinheit(en) verarbeiten. Die dabei ermittelten Ergebnisse werden als Ausgangssignale, welche von dem Fahrverhalten des vor dem eigenen KFZ befindlichen KFZs abgeleitet sind, von der elektronischen Steuereinheit wenigstens einem Steuergerät zugeführt, das auf das Fahrverhalten des eigenen KFZs Einfluss nimmt. Da die Erfassung der Objekte in einem zeitlichen Raster von wenigen zig Millisekunden (zum Beispiel 50 Millisekunden) erfolgt, lassen sich in der elektronische Steuereinheit die zeitlichen Änderungen der Positionen der einzelnen Objekte feststellen. Unter Berücksichtigung der Bewegung(en) des eigenen KFZs können auch Bewegungen der Objekte sowie ggf. deren Relativ-Geschwindigkeit in der elektronischen Steuereinheit berechnet werden. Daraus werden dann in der elektronischen Steuereinheit dem Objekt auch die Eigenschaften "stillstehend", "bewegt sich im wesentlichen in der gleichen Richtung wie das eigene Kraftfahrzeug", oder "bewegt sich im wesentlichen in der entgegengesetzten Richtung wie das eigene Kraftfahrzeug" zugeordnet. Mit anderen Worten wird aus Signalen von dem Signalgeber, der ein für in dem in Fahrtrichtung des KFZs vor dem KFZs liegenden Raum befindliche Objekte hinsichtlich deren Abstand und Orientierung zu dem KFZ charakteristisches Signal erzeugt, für in dem Raum befindliche Objekte wenigstens deren Geschwindigkeit relativ zur Geschwindigkeit des eigenen KFZs, deren Abstand relativ zum eigenen Kraftfahrzeug, sowie der Winkelversatz oder die Seitenablage relativ zur Längsachse des eigenen Fahrzeuges kontinuierlich erfasst und in der elektronischen Steuereinheit ausgewertet. Hierbei wird aus praktischen Gründen die Anzahl der beobachteten Objekte begrenzt. Stehende Ziele, also solche deren Relativ-Geschwindigkeit in Fahrtrichtung des eigenen KFZs gleich der Geschwindigkeit des eigenen KFZs mit entgegengesetzten Vorzeichen ist, werden ausgeschlossen. Nahe beim eigenen KFZ befindliche Objekte werden gegenüber weiter entfernt liegenden Objekte bevorzugt. Alle Objekte, die als Ziel-Objekte aufgrund der vom Radarsensor erfassten Signale von der elektronischen Steuereinheit überhaupt als in Frage kommend eingestuft werden, sind in einer Objekt-Tabelle geführt, in der auch die jeweiligen Eigenschaften und Daten der Objekte mitgeführt und anhand der laufenden (Neu-)Berechnungen durch die elektronische Steuereinheit eingetragen bzw. aktualisiert werden. Insbesondere zur Verringerung der möglichen Ziele, die sich auf der Fahrbahn vor dem eigenen KFZ befinden, wird in der Regel nicht der gesamte Erfassungsraum - begrenzt durch den Öffnungswinkel des (Radar-)Sensors ausgewertet, sondern ein demgegenüber verringerter Bereich. Diese Maßnahme reduziert die Anzahl der zu betrachtenden Objekte. Der Einfachheit halber wird jedoch - sofern nicht explizit darauf hingewiesen wird - nachfolgend davon ausgegangen, dass der tatsächlich ausgewertete Bereich und der Erfassungsraum vor dem eigenen KFZ übereinstimmen. Wie vorstehend erläutert, ist eine Stufe bei der Ermittlung des vom eigenen KFZ zu "verfolgenden" KFZs die Bestimmung der eigenen Fahrspur. Diese ist durch ihre Mittellinie, ihre Breite, bzw. näherungsweise durch Abschnitte mit konstantem Krümmungsradius festgelegt. Das vorliegende System modifiziert zur Festlegung der Mittellinie der eigenen Fahrspur im vor dem KFZs erfassten Raum den Krümmungsradius R der Bahnkurve des Schwerpunktes des eigenen KFZs anhand der Änderung der Winkelpeilung der voranfahrenden Objekte und der absoluten Lage der voranfahrenden Objekte gegenüber der momentan prädizierten Fahrspur in der elektronischen Steuereinheit. Hierbei wird als Ausgangswert für den Krümmungsradius R (zum Beispiel bei fehlenden vorausfahrenden Objekten) die Geschwindigkeit des eigenen KFZs dividiert durch dessen momentane Drehrate bestimmt, welche durch den entsprechenden Signalgeber der elektronischen Steuereinheit zugeführt wird. Der Krümmungsradius der Bahnkurve wird dann durch die Lateralgeschwindigkeiten in Abhängigkeit von sich im vor dem KFZ erfassten Raum bewegenden Objekte in der elektronischen Steuereinheit modifiziert. Einige weitere Kriterien, welche zu einer Veränderung des Krümmungsradius führen bzw. welche von dem in der elektronischen Steuereinheit ablaufenden Programm bei der Aktualisierung des Krümmungsradius berücksichtigt und ausgewertet werden, sind: (i) Die Aufenthaltsdauer der Objekte, die sich im vor dem KFZ durch den Sensor erfassten Raum bewegen, (ii) die Geschwindigkeit in Fahrtrichtung des eigenen KFZs der Objekte, die sich im vor dem KFZ erfassten Raum bewegen, und/oder (iii) der Abstand der Objekte vom eigenen Kraftfahrzeug, die sich im vor dem KFZ erfassten Raum bewegen. Bei niedriger Geschwindigkeit des eigenen KFZs wird der Krümmungsradius auch reduziert, da eine erhöhte Stabilität (Rauscharmut oder Konstanz) des die seitliche Position des KFZs wiedergebenden Signals auf diese Weise erreicht wird. Vorzugsweise wird hierzu in einer Tabelle ein (nicht linearer) Reduktionsfaktor geführt. Das Maß, mit dem Änderungen des Kurvenradius zulässig sind, ist auch vom Kurvenradius selbst abhängig. Bei sehr kleinem Kurvenradius wird eine relativ hohe Änderungsrate zugelassen. Insbesondere bei Kurvenausgängen wird dann erreicht, dass auf einer der Kurve folgenden geraden Strecke die korrekte Spur des voranfahrenden KFZs, welches als Ziel-KFZ ausgewählt wurde - aber auch die eigene Spur - wieder schnell gefunden wird. Das erfindungsgemäße System gibt sich eine Breite der eigenen Fahrspur vor, welche zunächst von den Fahrzeugabmessungen zuzüglich eines Sicherheitszuschlages von etwa 0.2 - 0.7 Meter auf jeder Seite abhängt. Auf einer geraden Strecke hätte damit die eigene Fahrspur eine im wesentlichen rechteckige Gestalt, deren - zu jedem Zeitpunkt betrachtete - Länge etwas geringer als die Reichweite des RadarSensors ist. Diese im wesentlichen rechteckige Fahrspur hat wird in der elektronischen Steuereinheit als Datenstruktur nachgebildet. Dabei wird die Breite der Fahrspur im Nahbereich (etwa 0 - 50 Meter) und im Fernbereich (150+ Meter) geringer als im Mittelbereich (50 -150 Meter) festgelegt. Um die Datenstruktur in der elektronischen Steuereinheit möglichst effizient zu halten wird bei dem erfindungsgemäßen System die Breite der eigenen Fahrspur nur an solchen Stellen im Raum vor dem eigenen KFZ in der elektronischen Steuereinheit festgelegt, an denen sich im erfassten Raum vor dem eigenen KFZ auch Objekte befinden. Das System modifiziert in der elektronischen Steuereinheit die Breite der eigenen Fahrspur in Abhängigkeit von der Entfernung erfasster Objekte im Raum vor dem eigenen KFZ und der Orientierung einer Kurve in der elektronischen Steuereinheit so, dass in großer Entfernung (150+ Meter) die Breite auf der Kurvenaußenseite abnimmt und die Breite in mittlerer Entfernung (50 - 150 Meter) auf der Kurveninnenseite zunimmt. Diese Vorgehensweise reduziert die Auswahl von ungünstigen Objekten als Ziel-Kraftfahrzeuge, welche vom eigenen Fahrzeug "verfolgt" werden. Damit geringe Lateralbewegungen des zu verfolgenden Ziel-KFZs nicht dazu führen, dass diese Lateralbewegungen als Spurwechsel dieses KFZs von der elektronischen Steuereinheit erkannt werden, wird die Breite der eigenen Fahrspur (und damit auch die Fahrspur des zu verfolgenden Ziel-KFZs ) in der elektronischen Steuereinheit (ECU) nach beiden Seiten an der Stelle verbreitert, an der sich das Ziel-KFZ befindet. Gleichermaßen wird auch die eigene Fahrspur in der elektronischen Steuereinheit in Abhängigkeit von der Dauer, mit der das Fahrverhalten des eigenen KFZs vom Fahrverhalten dieses Ziel-KFZs abhängig ist, nach beiden Seiten an der Stelle verbreitert, an der sich das Ziel-KFZ befindet. Zusätzlich oder anstatt der vorstehenden Maßnahme zur Stabilisierung des Fahrverhaltens des eigenen KFZs kann die Breite der eigenen Fahrspur in der elektronischen Steuereinheit auch in Abhängigkeit von der Kurvigkeit der Straße modifiziert werden, auf der sich das eigene KFZ befindet. Insbesondere wird hierbei die Breite verringert wenn die Straße sehr kurvig ist. Hierzu wird in der elektronischen Steuereinheit der momentan und ggf. auch der nur geringe Zeit zurückliegende Krümmungsradius ausgewertet. Bei einem geringen Krümmungsradius wird die Breite verringert. Gleiches gilt für die ebenfalls erfindungsgemäße Maßnahme, die Breite der eigenen Fahrspur in der elektronischen Steuereinheit in Abhängigkeit von der Geschwindigkeit des eigenen KFZs zumindest abschnittsweise zu modifizieren. Bei hoher Geschwindigkeit des eigenen KFZs wird die Breite der eigenen Fahrspur erhöht um zu vermeiden, dass das Ziel-KFZ bereits aufgrund geringer Lateral-Bewegungen des eigenen oder des verfolgten KFZs aus der Verfolgung "verloren" wird. Ein weiteres Kriterium bei der Ermittlung des optimalen vorausfahrenden Ziel-Fahrzeuges, von dessen Fahrverhalten das Fahrverhalten des eigenen KFZs abhängig gemacht werden soll, ist die Ermittlung der Fahrspuren der Straße, auf denen das eigene KFZ sich bewegt. Hierbei wird nicht nach - häufig auch nicht vorhandenen - Begrenzungsmarkierungen der Fahrspur gesucht. Vielmehr wird das Verhalten der im Raum vor dem eigenen KFZ sich bewegenden anderen Objekte ausgewertet um daraus Rückschlüsse zu ziehen, wie viele Fahrspuren die Straße hat, und auf welcher dieser Fahrspuren sich das eigene KFZ bewegt. Das erfindungsgemäße System führt für drei Fahrspuren in der Fahrtrichtung des eigenen KFZs sowie für drei Fahrspuren in der entgegengesetzten Fahrtrichtung sog. Spurlisten. Grundsätzlich wird dazu für jedes sich bewegende Objekt aus der Objekt-Tabelle in der elektronischen Steuereinheit der zeitliche Verlauf der Seitenablage (also der laterale Versatz des jeweiligen Objektes gegenüber der Mittelachse des eigenen KFZs und/oder der Verlauf der prädizierten Fahrspur) durch eine Tiefpass-Filterung mit einer kurzen Zeitkonstante geglättet und anschließend integriert. Um aus der Objekt-Tabelle die Spur-Listen zu generieren und aktuell zu halten wird zunächst die eigene Fahrspur ermittelt. Dazu werden Objekte an den seitlichen Rändern des erfassten Raums mit einem geringen Gewichtungsfaktor belegt und Objekte im Mittelbereich des erfassten Raums mit einem höheren Gewichtungsfaktor belegt. Gleichermaßen werden sehr weit entfernte Objekte und sehr nahe Objekte mit einer großen Seitenablage mit einem geringen Gewichtungsfaktor belegt. Alle gering bewerteten Objekten haben gemeinsam, dass ihre genaue seitliche Position nur schwer bestimmt werden kann und auch mit einer hohen Ungenauigkeit behaftet ist. Daher sollen sie bei der Fahrspurbestimmung nur in einem geringen Umfang eine Bedeutung haben. Aus den so gewichteten Objekten wird unter Einbeziehung der Bewegungen des eigenen KFZs in der elektronischen Steuereinheit die eigene Fahrspur ermittelt. Unter Zugrundelegung dieser Ergebnisse für die einzelnen Objekte werden sich bewegende Objekte in der elektronischen Steuereinheit als Objekte in der eigenen Fahrspur klassifiziert, wenn ein weiter als eine Mindestentfernung entferntes Objekt während eines vorbestimmten Zeitrahmens eine Auftrittsdauer in der eigenen Fahrspur hat, die zur Summe der Auftrittsdauer in einer oder beiden Nachbarspuren ein Verhältnis hat, das einen von der Entfernung des Objektes abhängigen Schwellenwert überschreitet. Ausgehend von der vorstehenden Bestimmung der Objekte in der eigenen Fahrspur kann zu Optimierung und zur Anpassung der Funktion an unterschiedliche Randbedingungen und Umgebungen der vorbestimmte Zeitrahmen in Abhängigkeit von der Geschwindigkeit des eigenen KFZs in der elektronischen Steuereinheit modifiziert werden. Außerdem kann der Schwellenwert mit geringer werdender Entfernung des Objektes von dem eigenen KFZ in der elektronischen Steuereinheit verringert werden. Schließlich werden im Raum vor dem eigenen KFZ erfasste, sich bewegende Objekte in der elektronischen Steuereinheit als Objekte in der links oder rechts von der eigenen Fahrspur befindliche Objekte klassifiziert, wenn sich ein Objekt links von der linken Begrenzung der eigenen Fahrspur bzw. rechts von der rechten Begrenzung der eigenen Fahrspur in der entsprechenden Entfernung befindet. Für die entgegenkommenden Kraftfahrzeuge wird anhand ihrer Fahrtrichtungsangabe und ihrer jeweiligen Seitenablage ebenfalls eine Fahrspurenzuordnung vorgenommen. Insgesamt wird erfindungsgemäß die Aufenthaltsdauer aller Objekte für die vorhandenen Fahrspuren in Bezug auf die eigene Fahrspur ermittelt und über die Zeit gewichtet, wobei zeitlich neuere Auftritte von Objekten in der Fahrspur des eigenen KFZs höher bewertet werden als zurückliegende Aufritte, und räumlich entfernt liegende Auftritte von Objekten in der Fahrspur des eigenen KFZs geringer bewertet werden als räumlich näher liegende Auftritte. Damit wird erreicht, dass eine sichere Bestimmung der Objekte als in der eigenen Fahrspur fahrend vorgenommen wird. Dies verringert bei der Auswahl des Ziel-Objektes, hinter dem "herzufahren" ist, die Wahrscheinlichkeit einer Fehl-Auswahl. Aus den vorhandenen Fahrspuren werden nun jeweils maximal zwei sich bewegende Objekte in der elektronischen Steuereinheit ausgewählt und als Prioritäts-Objekte gekennzeichnet, wenn sie während eines über einem Mindestwert liegenden Zeitraums als sich vor dem eigenen KFZ bewegend erfasst wurden, wobei diese jeweilige Dauer jedes Objektes für sehr nahe zum eigenen KFZ ( ca. 0 - ca. 30 m) befindliche Objekte geringer gewichtet wird. Damit ist die Anzahl der Kandidaten, aus denen das Ziel-KFZ ausgewählt wird, schon stark eingeschränkt. Außerdem sind diese maximal sechs Objekte diejenigen, welche für das Fahrverhalten des eigenen KFZs von herausragender Bedeutung sind. Daher ist es in erster Näherung ausreichend diese sechs Objekte zu betrachten um daran das momentane Fahrverhalten des eigenen KFZs auszurichten. Dabei wird für jedes Prioritäts-Objekt in der elektronischen Steuereinheit ermittelt, wie weit jedes Prioritäts-Objekt seine seitliche Lage relativ zur Mittellinie der Fahrspur des eigenen KFZs verändert. Hierbei wird als Änderungswert der Fahrspur des eigenen KFZs im jeweiligen Abstand zum eigenen KFZ die Summe der Mittelwerte der seitlichen Lageänderungen der Prioritäts-Objekte ermittelt. In der elektronischen Steuereinheit wird nun aus den Prioritäts-Objekten dasjenige als Ziel-KFZ auswählt, von dessen Fahrverhalten das Fahrverhalten des eigenen KFZs abhängig sein soll, welches (i) sich in der Fahrspur des eigenen KFZs bewegt, (ii) eine Bewegungsrichtung über Grund hat, die im wesentlichen mit der Bewegungsrichtung des eigenen KFZs übereinstimmt; und (iii) bereits während einer vorbestimmten Zeitdauer im Raum vor dem eigenen KFZ erfasst wurde. Das in der elektronischen Steuereinheit ablaufende Programm wählt aus den Prioritäts-Objekten vorzugsweise dasjenige als Ziel-KFZ aus, von dessen Fahrverhalten das Fahrverhalten des eigenen KFZs abhängig sein soll, bei dem die Quergeschwindigkeit relativ zur Mittellinie der eigenen Fahrspur einen Schwellenwert nicht überschreitet. Hierzu wird vorzugsweise für die einzelnen Objekte deren Seitenablage aus der Ziel-Liste nach der Zeit differenziert. Hierbei ist der Schwellenwert in Abhängigkeit vom Abstand des jeweiligen Objektes zum eigenen KFZ veränderbar. Diese Maßnahmen stellen sicher, dass vorzugsweise ein KFZ als das zu verfolgende Ziel-KFZ ausgewählt wird, welches ein relativ ruhiges Fahrverhalten hat. Als Folge hiervon ist auch die Wahrscheinlichkeit gering, dass dieses ausgewählte KFZ "aus der Sensor-Erfassung verloren geht", was wiederum zu einem ruhigeren Fahrverhalten des eigenen KFZs führt. Als weitere Verbesserung der Erfassungssicherheit, Insbesondere zur Vermeidung von Spiegeleffekten des Sensorstrahls (an der Fahrbahnbegrenzung oder an anderen - sich ggf. bewegenden - Objekten) wird durch die elektronische Steuereinheit in der Zielliste für jedes Objekt ein Wert vorgehalten und regelmäßig aktualisiert, der die Rauschamplitude des Peilwinkels zu jedem der Objekte wiedergibt. Für alle Objekte wird in der elektronischen Steuereinheit der zeitliche Verlauf dieses Wertes mittels eines Tiefpasses geglättet. Wenn der geglättete Wert-Verlauf für ein Objekt einen entfernungsabhängigen Schwellenwert überschreitet, wird dieses Objekt von der Auswahl als Ziel-KFZ ausgeschlossen. Eine weitere Maßnahme zur Erhöhung der Stabilität des Systems - also zur Vermeidung von Fehl-Auswahlen - besteht darin, dass die elektronische Steuereinheit ein Prioritäts-Objekt aus der Ziel-Liste von der Auswahl als Ziel-KFZ ausschließt, wenn (i) dessen Abstand zum eigenen KFZ geringer ist als ein Entfernungs-Schwellenwert, (ii) der Absolutwert des Peilwinkels zu diesem Prioritäts-Objekt größer ist als ein Winkel-Schwellenwert (zum Beispiel 4°), und (iii) dieses Prioritäts-Objekt bisher nicht als Ziel-KFZ ausgewählt war. Damit wird sichergestellt, dass ein - unnötiger - Wechsel des Ziel-KFZs oder ein Hin- und Herspringen zwischen zwei (vermeintlich) "gleich guten" Objekten unterbleibt. Dies hat den positiven Effekt, dass ein mit dem Wechsel auf ein neues Ziel-KFZ verbundenes Ansteigen oder Absenken der Geschwindigkeit des eigenen KFZs unterbleibt. Das erfindungsgemäße System wertetet für das Ziel-KFZ die Änderung des Peilwinkels gesehen vom eigenen KFZ sowie die Drehrate für das eigene KFZ kontinuierlich aus um einen Spurwechsel des eigenen KFZs zu erkennen. Dazu wird ermittelt, ob die Änderung des Peilwinkels zum Ziel-Kraftfahrzeug, von dessen Fahrverhalten das Fahrverhalten des eigenen KFZs abhängig sein soll, über einem bestimmten Schwellenwert liegt und im wesentlichen gleich der Drehrate des eigenen KFZs mit inversem Vorzeichen ist. Um zu erkennen, ob das eigene KFZ sich in einer Kurvenfahrt befindet, wird in der elektronischen Steuereinheit eine mit der Krümmung der Fahrspur des eigenen KFZs in Beziehung stehende Größe als Eingangssignal parallel mehreren TP-Filtern mit unterschiedlichen Zeitkonstanten (niedriger, vorzugsweise 1. Ordnung ) zugeführt. Die Ausgangssignale der TP-Filter und das Eingangssignal werden miteinander verglichen. Wenn die (Amplituden der) Ausgangssignale einen jeweiligen Mindestabstand zu einander haben und das Ausgangssignal eines jeweiligen Tiefpass-Filters geringer ist als das Ausgangssignal eines Tiefpass-Filters mit einer geringeren Zeitkonstante und größer ist als das Ausgangssignal eines Tiefpass-Filters mit einer größeren Zeitkonstante, oder das Ausgangssignal eines jeweiligen Tiefpass-Filters größer ist als das Ausgangssignal eines Tiefpass-Filters mit einer geringeren Zeitkonstante und geringer ist als das Ausgangssignal eines Tiefpass-Filters mit einer größeren Zeitkonstante, wird im Straßenverlauf des eigenen KFZs ein Übergang von einer Kurve einer Orientierung zu einer Kurve entgegengesetzter Orientierung erkannt. Wenn die elektronische Steuereinheit festgestellt hat, dass das eigene KFZ sich in einem Kurvenübergang, zum Beispiel einer S-Kurve befindet, wird die Länge der ausgewerteten Fahrspur reduziert, da in dieser Situation oftmals unterschiedliche Objekte ihre Seitenablage sehr stark ändern. Bei verringerter Auswertungslänge fallen insbesondere in größerem Abstand vor dem eigenen KFZ herfahrende Objekte aus der Betrachtung heraus. Da die Wahrscheinlichkeit, dass ein in größerem Abstand vor dem eigenen KFZ herfahrendes Objekt fälschlicherweise in der eigenen Fahrspur erscheint, in einer solchen Situation relativ hoch ist, wird durch Verringerung der Auswertelänge die Fehlerquote gesenkt. Ein wesentlicher Aspekt bei der Umgebungserkennung ist die Straßenarterkennung. Die Straßenarterkennung ist von Vorteil bei einer optimalen Abstimmung bei der Auswahl des Ziel-KFZ und bei der Regelung der Geschwindigkeit des eigenen KFZs. Dies beruht auf der Erkenntnis, dass unterschiedliche Straßenarten eine erheblich voneinander abweichende Abstimmung einzelner Systemparameter (Länge und Breite der ausgewerteten Fahrspur/en, Beschleunigungsschwellen, etc.) erfordern um das System optimal zu betreiben, das heißt so, dass es möglichst genau der Erwartungshaltung des Fahrers entspricht. Das erfindungsgemäße System wertet die Geschwindigkeit des eigenen KFZs, die Anzahl der erkannten Fahrspuren mit der gleichen Fahrtrichtung wie die des eigenen KFZs, der Krümmung der Fahrspuren, etc. aus Um dies zu realisieren wird erfindungsgemäß ein Kennwert ermittelt, der flie-ßende Übergänge hat und als Umgebungsgeschwindigkeit definiert ist. Dieser Kennwert hat die Dimension Geschwindigkeit (Weg/Zeit). Das erfindungsgemäße System ermittelt zur Unterscheidung der Art der Straße, auf der das eigene KFZ fährt, für wenigstens zwei unterschiedliche Straßen-Umgebungen (Stadtverkehr, Landstraße, Autobahn) in der elektronischen Steuereinheit Kennwerte, wobei eine den jeweiligen Kennwert beeinflussende Größe die aus den Geschwindigkeiten der im Raum vor dem eigenen KFZ erfassten Objekte sowie der Geschwindigkeit des eigenen KFZs ermittelte, vorzugsweise durch Mittelwertbildung bestimmte, Umgebungs-Geschwindigkeit ist. Dabei haben die Straßen-Umgebungen keine starren Grenzwerte sondern fließende Grenzen. Der Wert "Umgebungs-Geschwindigkeit" liegt, sofern er im Bereich "Autobahn" liegt, etwa bei 120 km/h - 150 km/h. Dies gilt, auch wenn die tatsächlich gefahrene Geschwindigkeit des KFZs momentan geringer oder höher ist. Im Bereich "Landstraße" liegt der Wert bei etwa 60 km/h -100 km/h. Im Bereich "Stadtverkehr" liegt der Wert bei etwa 30 km/h - 50 km/h. Aufgrund einer Fahrt über längere Zeit hinweg mit längerer hoher Geschwindigkeit und geringen Lenkausschlägen erhöht die elektronische Steuereinheit stufenweise den Wert "Umgebungs-Geschwindigkeit" soweit, dass er in den Bereich "Autobahn" (120 km/h - 150 km/h) kommt. Durch einen Fahrabschnitt mit einem Kurvenradius und mit einer Länge, wie sie üblicherweise bei Autobahnausfahrten vorkommen und entsprechender erheblich verringerter Geschwindigkeit, wird der Wert "Umgebungs-Geschwindigkeit" mit einer hohen Rate auf einen Wert von zum Beispiel 50 km/h - 70 km/h zurückgeführt, der dem Bereich "Landstraße" entspricht, auch wenn die momentan gefahrene Geschwindigkeit darüber liegt. Bei dem erfindungsgemäßen System wird in der elektronischen Steuereinheit der Wert "Umgebungs-Geschwindigkeit" von einem momentanen Betrag an die tatsächlich gefahrene Geschwindigkeit des eigenen KFZs über eine vordefinierte Funktion (zum Beispiel Rampe, Stufe) angenähert. Vorzugsweise erfolgt eine Annäherung von einem höheren Wert als dem momentanen Betrag der tatsächlich gefahrenen Geschwindigkeit mit einer ersten Geschwindigkeitsrate und eine Annäherung von einem niedrigeren Wert als dem momentanen Betrag der tatsächlich gefahrenen Geschwindigkeit mit einer zweiten, vorzugsweise erheblich höheren als der ersten Geschwindigkeitsrate. Auf diese Weise wird sichergestellt, dass Geschwindigkeitsabfälle von kurzer Dauer, zum Beispiel auf der Autobahn im Bereich einer Baustelle, oder aufgrund eines in die Fahrspur des eigenen KFZs hineinscherenden langsameren KFZs kein sofortiges Zurückfallen in den Wertebereich "Landstraße" oder gar "Stadtverkehr" hervorrufen. Weiterhin wird in der elektronischen Steuereinheit der Wert "Umgebungs-Geschwindigkeit" über eine vordefinierte Funktion (zum Beispiel Rampe, Stufe) erhöht, wenn sich vor dem eigenen KFZ wenigstens zwei im wesentlichen nebeneinander her fahrende andere Objekte befinden und das eigene KFZ eine tatsächliche Geschwindigkeit fährt, die im Bereich "Landstraße" liegt. Hierbei erfolgt eine Erhöhung des Wertes "Umgebungs-Geschwindigkeit" mit einer dritten, vorzugsweise erheblich höheren als der zweiten Geschwindigkeitsrate. Insbesondere kann hierbei ein oberer Schwellenwert erreicht werden, wenn längere Zeit auf einer außerhalb einer Ortschaft liegenden mehrspurigen Kraftfahrstrasse eine relativ hohe Geschwindigkeit erreicht wird. Außerdem wird der Wert "Umgebungs-Geschwindigkeit" auf einen unteren Grenzwert über eine vordefinierte Funktion (zum Beispiel Rampe, Stufe) reduziert, wenn sich aus dem Wert "Umgebungs-Geschwindigkeit" und der momentanen Drehrate des eigenen KFZs eine Querbeschleunigung ergäbe, die einen Schwellenwert übersteigt. In diesem Fall erfolgt die Absenkung des Wertes "Umgebungs-Geschwindigkeit" mit einer vierten, vorzugsweise erheblich höheren als der dritten Geschwindigkeitsrate. Dies stellt sicher, dass in engen Kurven sehr schnell eine Absenkung des Wertes "Umgebungs-Geschwindigkeit" erfolgt. Schließlich ist der Wert "Umgebungs-Geschwindigkeit" auf ein vorbestimmbares Vielfaches (zum Beispiel 1.2) der Wunschgeschwindigkeit des KFZs begrenzt. Dieser Maßnahme liegt die Überlegung zugrunde, dass bei einem Wechsel der Umgebung zum Beispiel von Stadtverkehr auf Landstraße oder Autobahn eine vom Fahrer vorgenommene Änderung der Wunschgeschwindigkeit folgt. Somit kann auch bei relativ zügigem Verkehr auf mehrspurigen Straßen außerhalb von Ortschaften nicht ohne einen Eingriff des Fahrers das Geschwindigkeits-Niveau "Autobahn" erreicht werden. Der Wert "Umgebungs-Geschwindigkeit" kann maximal einen vorbestimmbaren unteren Grenz-/Schwellenwert und einen vorbestimmbaren oberen Grenz-/Schwellenwert annehmen. Der Krümmungsverlauf der vom eigenen KFZ befahrenen Fahrspur wird bei dem erfindungsgemäßen System nach dem Weg differenziert. In Abhängigkeit von dem Ergebnis wird ein Kennwert "Kurvigkeit" bestimmt, der von der Geschwindigkeit des eigenen KFZs unabhängig ist.Das Ergebnis der Differenzierung des Krümmungsverlaufs der vom eigenen KFZ befahrenen Fahrspur wird außerdem in der elektronischen Steuereinheit ausgewertet um bei langen geraden Abschnitten der Fahrspur über einer bestimmten Wegstrecke in Abhängigkeit von dem Ergebnis den Kennwert "Kurvigkeit" mit einer vorbestimmten Rate zu verringern. Das Ergebnis der Differenzierung des Krümmungsverlaufs der vom eigenen KFZ befahrenen Fahrspur wird außerdem in der elektronischen Steuereinheit ausgewertet um bei S-Kurven (zwei gegenläufige Kurvenabschnitte ohne gerades Zwischenstück) in Abhängigkeit von dem Ergebnis den Kennwert "Kurvigkeit" mit einer vorbestimmten Rate zu erhöhen. Bei dem erfindungsgemäßen System wird in der elektronischen Steuereinheit bei Vorliegens eines Signals, das eine über einem ersten vorbestimmten Wert liegende Krümmung des Fahrspur des eigenen KFZs wiedergibt, der Kennwert "Kurvigkeit" mit einer hohen Rate um einen dynamischen Anteil erhöht und bei Wegfallen des über einem zweiten vorbestimmten Wert liegenden Drehratensignals der dynamische Anteil wieder zurückgeführt.

Damit wird insbesondere für Kurvenfahrten mit kleinem Kurvenradius eine schnelle Verringerung des Wertes "Umgebungs-Geschwindigkeit" erzielt, ohne dass dies zum Beispiel beim Durchfahren von Autobahnkreuzen oder Autobahndreiecken zum Verlassen des Bereiches "Autobahn" für den Wert "Umgebungs-Geschwindigkeit" führt. Um die Verringerung der Falschzielauswahl weiter zu verbessern, wird außerdem bei dem erfindungsgemäßen System in der elektronischen Steuereinheit der dynamische Anteil bei Rechtsverkehr nur für Rechtskurven und bei Linksverkehr nur für Linkskurven zu dem Wert "Kurvigkeit " addiert bzw. von diesem wieder subtrahiert. Vorzugsweise wird in der elektronischen Steuereinheit der dynamische Anteil abhängig von der durchschnittlichen Krümmung der Fahrspur und der Fahrtrichtungsänderung seit Kurveneingang modifiziert. Dabei ist der Kurveneingang definiert als der Zeitpunkt, an dem das Krümmungssignal des ersten vorbestimmten Schwellenwert überschreitet. Die Fahrtrichtungsänderung ergibt sich aus dem Integral der Gierrate des KFZs über der Zeit. Bei der Auswahl des Ziel-KFZs besteht das Problem, dass eine angestrebte, möglichst frühe Erfassung möglicher Ziel-Objekte zwar zu einer erhöhten Stabilität oder Ruhe beim "Nachfahren" dieses bereits sehr weit vor dem eigenen KFZ erfassten Ziel-KFZs führt. Insbesondere bei kurvigen Autobahnen steigt allerdings dabei auch die Gefahr, dass ein falsches Ziel-KFZ ausgewählt wird, das sich tatsächlich nicht in der eigenen Fahrspur befindet. Daher stellt die Erfindung eine Vorgehensweise bereit, die eine Abschätzung erlaubt, wie anfällig die aktuelle ZielAuswahl für eine Falschauswahl aufgrund der Umgebungssituation ist. Dabei werden bei dem erfindungsgemäßen System in Abhängigkeit von dem Kurvigkeitswert aus den Prioritäts-Objekten diejenigen von der Auswahl als Ziel-KFZ ausgeschlossen, welche von dem eigenen KFZ weiter entfernt sind als andere. Um die Auswahl von Prioritätsobjekten möglichst treffsicher und Effizient zu gestalten ist es von Vorteil, wenn das System über die Information verfügt, ob das eigenen KFZ sich in einer Umgebung mit Links- oder mit Rechtsverkehr bewegt. Ausgehend hiervon kann eine Asymmetrierung der Auswahl vorgenommen werden. Erfindungsgemäß werden basierend auf dieser Information Kraftfahrzeuge in der "langsameren" oder "schnelleren" Fahrspur als der eigenen eher als "Falsche Prioritätsziele" von der Auswahl ausgeschlossen als andere, in der eigenen Fahrspur befindliche. Außerdem wird erfindungsgemäß nach dem Ausscheren in die "schnellere" Fahrspur eine höhere Beschleunigung vorgenommen, etc. Dazu wird erfindungsgemäß bei einem (aktiven oder passiven) Überholvorgang ermittelt, auf welcher Seite sich beim Überholen das überholende KFZ befindet. Hierzu wird in der elektronischen Steuereinheit für vor dem eigenen KFZ in den vorhandenen Fahrspuren herfahrende Kraftfahrzeuge deren Geschwindigkeit ermittelt und hieraus einen Kennwert ableitet, der angibt, ob das eigene KFZ sich in Links- oder in Rechtsverkehr befindet. Dazu wird von einer vorbestimmten Anzahl der vor dem eigenen KFZ in den vorhandenen Fahrspuren herfahrenden Kraftfahrzeuge die zurückgelegte Strecke oder eine damit korreliert Größe ermittelt und zu der entsprechenden Größe für das eigene KFZ in Beziehung gesetzt, Indem der Kennwert als Summe der Differenzen der Geschwindigkeiten der Kraftfahrzeuge einer ersten, vorzugsweise der linken Fahrspur und der Geschwindigkeiten der Kraftfahrzeuge einer zweiten, vorzugsweise der rechten Fahrspur bestimmt wird. Zur Erhöhung der Sicherheit bei der Erkennung wird ein oberer Schwellenwert und ein unterer Schwellenwert bestimmt, wobei die elektronische Steuereinheit ein Signal "Rechtsverkehr" erzeugt und abspeichert, wenn der Kennwert den oberen Schwellenwert überschreitet, und die elektronische Steuereinheit ein Signal "Linksverkehr" erzeugt und abspeichert, wenn der Kennwert den unteren Schwellenwert unterschreitet. Vorzugsweise werden nur Geschwindigkeiten von Kraftfahrzeugen berücksichtigt, die einen vorbestimmten Schwellenwert überschreiten. Dies vermeidet Fehlauswertungen aufgrund von Kolonnenverkehr oder in Ortschaften. Um Fehler bei der Spurzuordnung zu vermeiden, werden nur dann vor dem eigenen KFZ herfahrende Kraftfahrzeuge ausgewertet, wenn der Radius der Fahrspur einen vorbestimmten Schwellenwert überschreitet. Zur weiteren Erhöhung der Auswahlsicherheit kann zusätzlich oder an Stelle der Auswertung der Geschwindigkeiten der Kraftfahrzeuge in der gleichen Fahrtrichtung wie das eigene KFZ auch die Ermittlung treten, auf welcher Seite des eigenen KFZs sich Kraftfahrzeuge mit entgegengesetzter Fahrtrichtung befinden. Dazu wird in der Steuereinheit bei Kraftfahrzeugen mit zur Geschwindigkeit des eigenen KFZs negativer Relativgeschwindigkeit, deren Betrag größer ist als die Geschwindigkeit des eigenen KFZs das Vorzeichen des jeweiligen Kennwertes vor dem Aufsummieren invertiert. Dabei kann für Kraftfahrzeuge mit zur Geschwindigkeit des eigenen KFZs negativer Relativgeschwindigkeit, deren Betrag größer ist als die Geschwindigkeit des eigenen KFZs der Kennwert mit einem Gewichtungsfaktor versehen werden. Da der Erfassungsraum vor dem eigenen KFZ wie oben erläutert sich im wesentlichen kegelförmig vor der Frontpartie des KFZs symmetrisch zu dessen Mittellängsachse mit einem relativ schmalen Öffnungswinkel ausbreitet, kann es in engen Kurven, zum "Verlust" des Ziel-KFZs kommen. Unmittelbar nach dem Verlust des Ziel-KFZ kann es dann vorkommen, dass die Geschwindigkeit des eigenen KFZs von der elektronischen Steuereinheit erhöht wird. Dies hat zur Folge, dass das KFZ mit erhöhter Geschwindigkeit auf eine Kurvensituation zufährt oder in der Kurve beschleunigt. Folglich muss der Fahrer eingreifen und abbremsen. Um dies zu vermeiden wird erfindungsgemäß, wenn festgestellt wird, dass ein Ziel-KFZ den Erfassungsraum vor dem eigenen KFZ verlässt, in der elektronischen Steuereinheit ein Ansteuersignal erzeugt, das die momentane Geschwindigkeit oder die momentane Beschleunigung des eigenen KFZs wenigstens für eine Strecke auf einen Wert begrenzt, der maximal dem Abstand X zwischen dem eigenen KFZ und dem Ziel-KFZ zum Zeitpunkt dessen Verlassens des Erfassungsraums im wesentlichen entspricht. Auf diese Weise bleibt die Geschwindigkeit des eigenen KFZs solange konstant oder erhöht sich nur geringfügig, bis auch das eigene KFZ die Kurve erreicht hat, bzw. den Ort, an dem das Ziel-KFZ "verloren" wurde. Dies bedeutet einen erheblichen Zugewinn an Komfort und Sicherheit, da selbst auf sehr kurvenreichen Strecken kaum oder keine Bremseingriffe des Fahrers erforderlich sind. Der Fahrer muss im wesentlichen nur noch lenken, während das Ziel-KFZ durch seine Verzögerung vor einem Kurveneingang bzw. Beschleunigung am Kurvenausgang die entsprechende Vorgabe für die elektronische Steuereinheit im eigenen KFZ liefert. Den Zeitraum zwischen dem "Verlieren" und "Wiederfinden" des Ziel-KFZs überbrückt die elektronische Steuereinheit entsprechend. Da der Verlust des Ziel-KFZs in der Regel erst geschieht, wenn dieses sich bereits in der Kurve befindet wird in einer bevorzugten Ausführungsform in der elektronischen Steuereinheit der Abstand X zwischen dem eigenen KFZ und dem Ziel-KFZ zum Zeitpunkt des Verlassens des Erfassungsraums um eine Verkürzungsstrecke DX auf einen effektiven Abstand Xeff verringert. Die Verkürzungsstrecke DX ist von der Umgebung (Autobahn, Landstraße, Stadtverkehr), der Geschwindigkeit des Ziel-KFZs zum Zeitpunkt des Verlassens des Erfassungsraums, der momentanen Geschwindigkeit des eigenen KFZs, den Kurvenradien von innerhalb eines vorbestimmten Zeitraums in der Vergangenheit bereits durchfahrener Kurven, oder dergl. abhängig zu verändern. Dabei kann die Verkürzungsstrecke DX auch aus dem Durchschnitt der Kurvenradien von innerhalb eines vorbestimmten Zeitraums in der Vergangenheit bereits durchfahrener Kurven ermittelt werden. Das Ansteuersignal enthält dabei Information darüber, bzw. ist für eine maximale Zeitdauer charakteristisch, die sich aus der momentanen Geschwindigkeit des eigenen KFZs und dem Abstand X zwischen dem eigenen KFZ und dem Ziel-KFZ zum Zeitpunkt dessen Verlassens des Erfassungsraum oder dem effektiven Abstand Xeff ergibt. Zur weiteren Erhöhung der Auswahlsicherheit des Ziel-KFZs kann auch die Ermittlung treten, ob ein Objekt, das sich im Erfassungsraum vor dem eigenen KFZ befindet, einen vorbestimmten Abstand unterschreitet und sich nicht in der Fahrspur des eigenen KFZs befindet, von der Auswahl als Prioritäts-Objekt ausgeschlossen wird. Diese erfindungsgemäße Strategie trägt dem Umstand Rechnung, dass für Ziele in geringer Entfernung vom eigenen KFZ die Ortsbestimmung nicht mehr mit der erforderlichen Genauigkeit erfolgen kann. Da derartige Objekte über die sog. Nebenkeulen eines Radarsensors noch erfasst werden, erscheint es, als ob aus einer Nachbarspur in die Fahrspur des eigenen KFZs einscheren würden. Weiterhin kann ein Objekt, das zur Mittel-Längsachse des Sensors des eigenen KFZs sich außerhalb eines vorbestimmten Winkels befindet oder einen vorbestimmten Winkel überschreitet, von der Auswahl als Prioritäts-Objekt ausgeschlossen werden. Gleiches gilt für ein Objekt, das während eines vorbestimmten Zeitraums in der Vergangenheit nicht Ziel-KFZ war.

### Kurzbeschreibung der Zeichnung

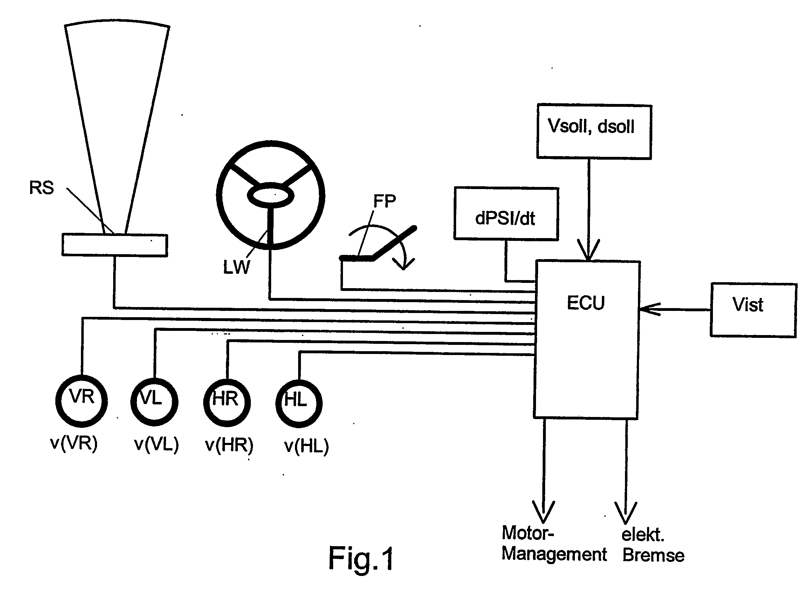

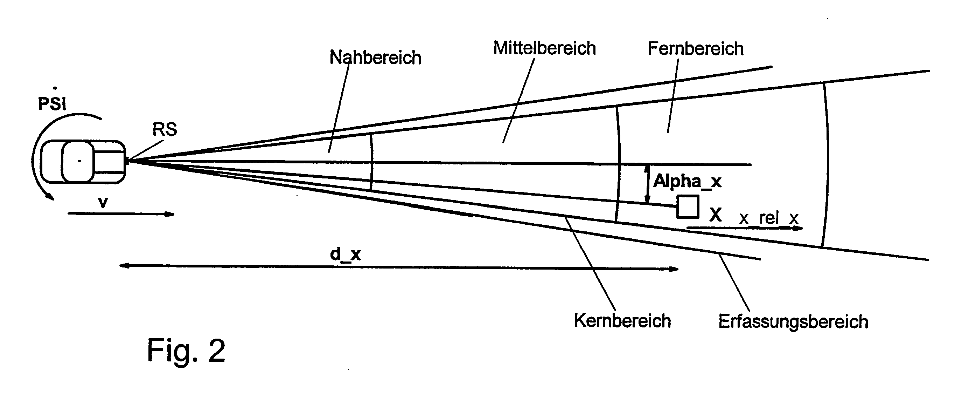

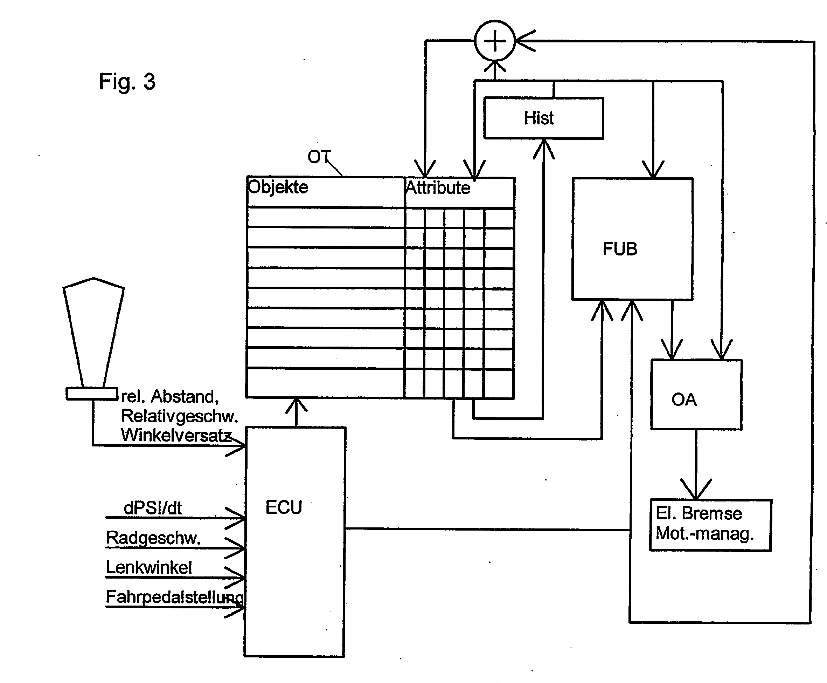

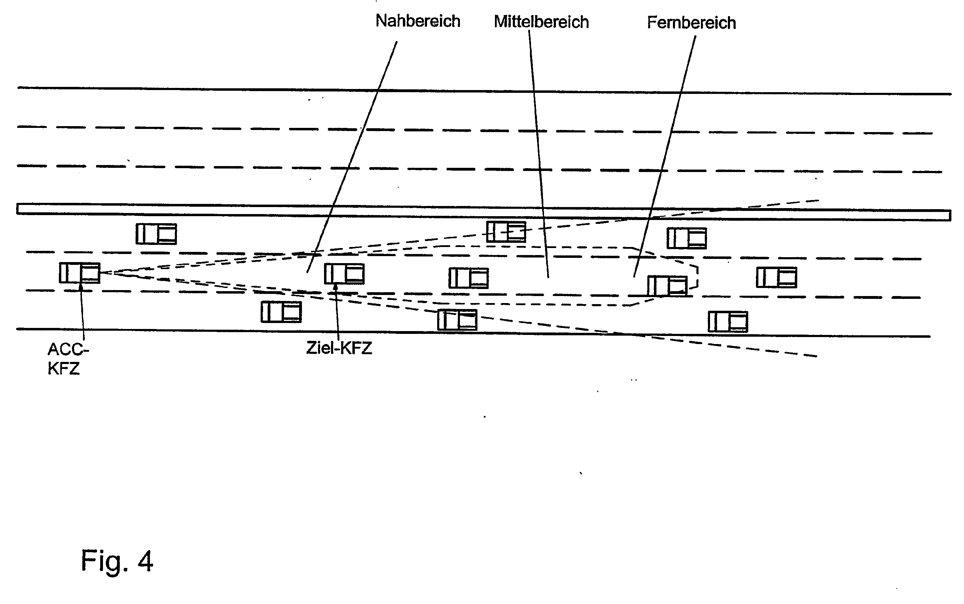

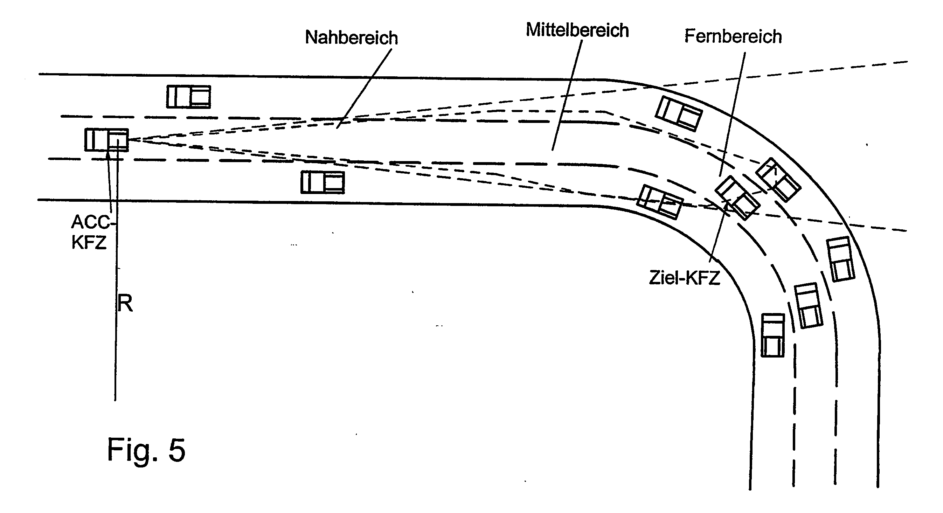

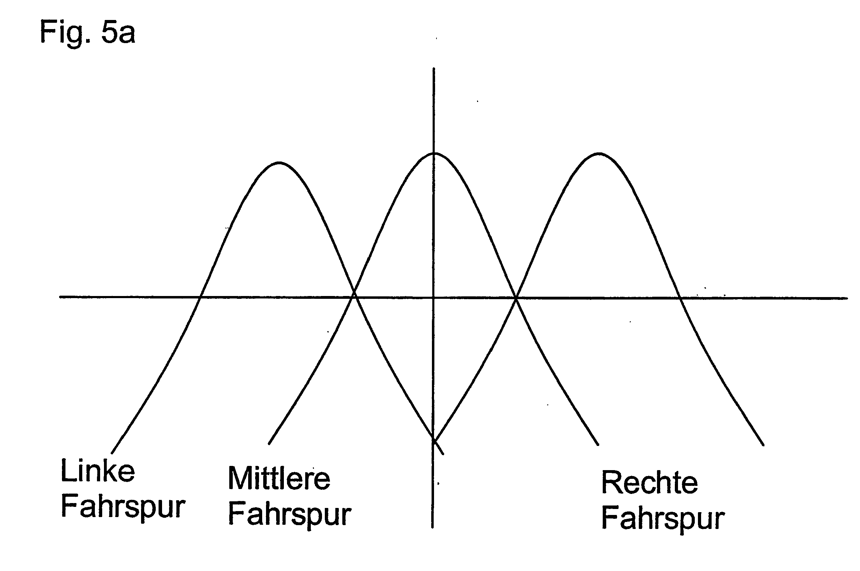

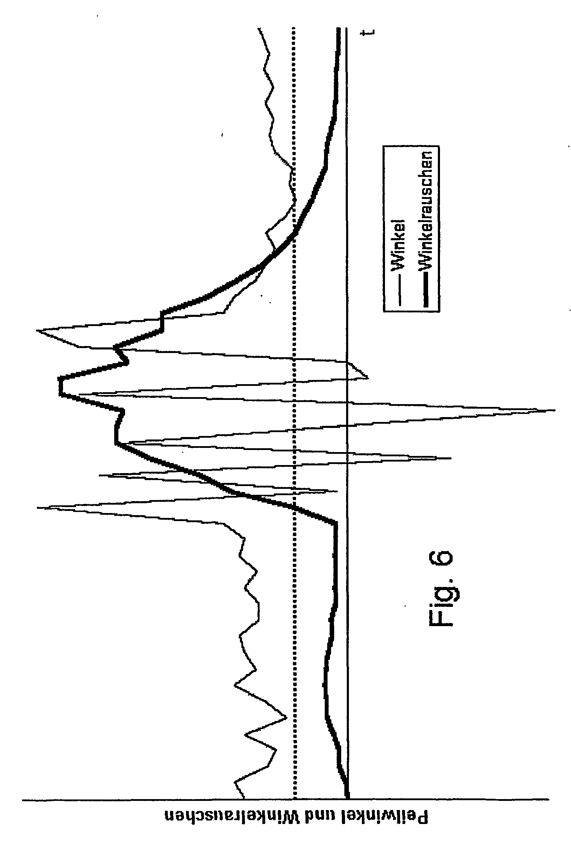

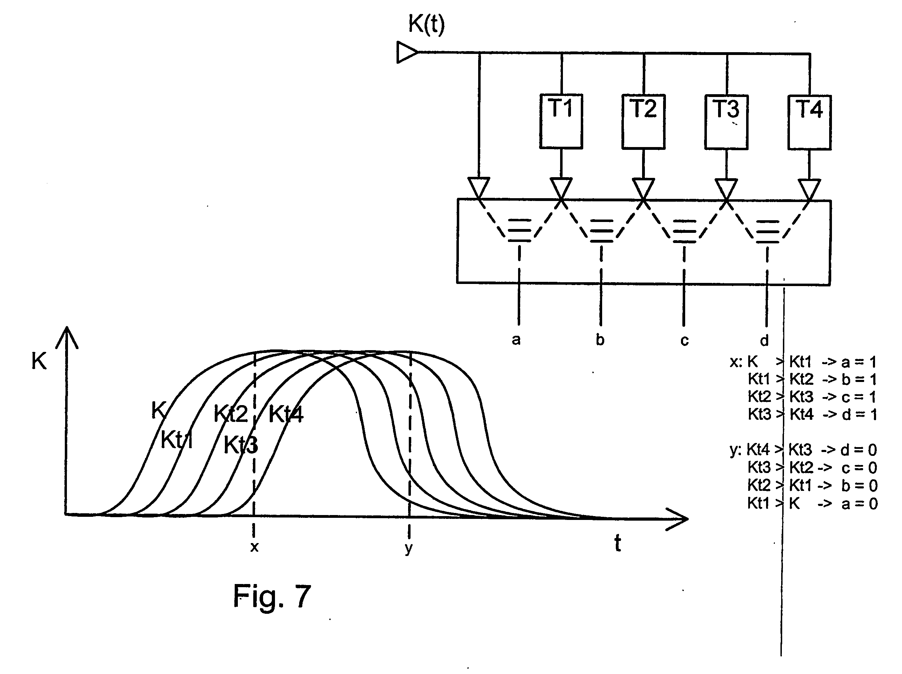

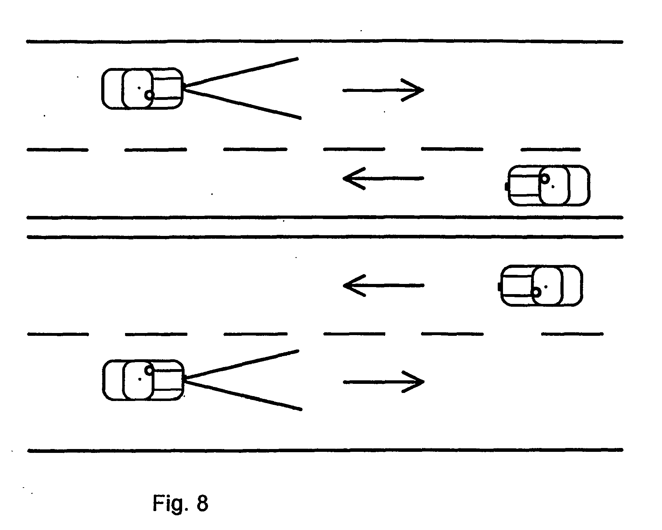

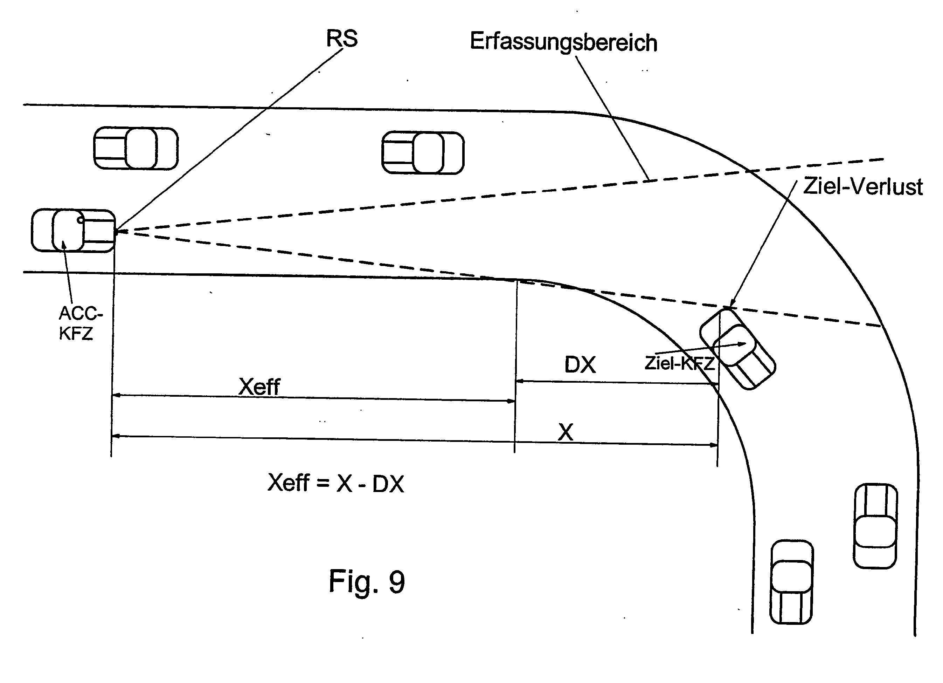

Weitere Details, Funktionen, Alternativen und Abwandlungen der Erfindung werden nachstehend anhand der Beschreibung der Zeichnung erläutert. Fig. 1 zeigt ein schematisches Blockschaltbild einer Ausführungsform eines erfindungsgemäßen Systems zur Auswertung der Fahrumgebung eines KFZs; Fig. 2 erläutert die Beziehungen der einzelnen von dem Radarsensor in dem erfindungsgemäßen System zur Auswertung der Fahrumgebung eines KFZs nach Fig. 1 erfassten physikalischen Größen; Fig. 3 veranschaulicht, wie das erfindungsgemäße System nach Fig. 1 die empfangenen Datensignale aus den unterschiedlichen Sensoren verarbeitet; Fig. 4 veranschaulicht die Situation eines KFZs mit einem erfindungsgemäßen System zur Auswertung der Fahrumgebung eines KFZs auf einem mehrspurigen geraden Fahrbahnabschnitt; Fig. 5 veranschaulicht die Situation eines KFZs mit einem erfindungsgemäßen System zur Auswertung der Fahrumgebung eines KFZs auf einem mehrspurigen gekrümmten Fahrbahnabschnitt; Fig. 5a zeigt die Wahrscheinlichkeitsverteilung, dass ein KFZ in einer linken, mittleren oder rechten Fahrspur anzutreffen ist; Fig. 6 zeigt die für jedes der Objekte berechnete Rauschamplitude des Peilwinkels; Fig. 7 zeigt ein schematisches Blockschaltbild und deren Eingangs- und Ausgangssignale für das Erkennen von Links- oder Rechtskurven in einem erfindungsgemäßen System zur Auswertung der Fahrumgebung eines KFZs; Fig. 8 zeigt die Situation eines KFZs mit einem erfindungsgemäßen System zur Auswertung der Fahrumgebung eines KFZs bei der Erkennung ob sich das KFZ in Rechts- oder Linksverkehr bewegt; und Fig. 9 veranschaulicht das Verhalten eines KFZs mit einem erfindungsgemäßen System zur Auswertung der Fahrumgebung eines KFZs auf einem gekrümmten Fahrbahnabschnitt bei Verlust des Ziel-KFZs.

### Detaillierte Beschreibung einer bevorzugten Ausführungsform der Erfindung

Fig. 1 zeigt eine Ausführungsform eines schematischen Blockschaltbildes eines erfindungsgemäßen Systems zur Auswertung der Fahrumgebung eines KFZs und zur Beeinflussung der Geschwindigkeit des KFZs. Dieses System hat eine elektronische Steuereinheit ECU, die mit einem Signalgeber verbunden ist, der ein für die Wunschgeschwindigkeit Vsoll des KFZs charakteristisches Signal erzeugt Weiterhin empfängt die elektronische Steuereinheit **ECU** von einem als Gierratensensor arbeitenden Signalgeber ein für die Drehrate **dPSI/dt** des KFZs um dessen Hochachse charakteristisches Signal. Außerdem ist die elektronische Steuereinheit **ECU** mit einem als Radarsensor **RS** arbeitenden Signalgeber verbunden. Der Radarssensor **RS** erzeugt für in dem in Fahrtrichtung des KFZs vor dem KFZ liegenden Raum befindliche Objekte hinsichtlich deren Abstand und Orientierung zu dem KFZ charakteristische Signale, die der elektronischen Steuereinheit **ECU** zugeführt und in dieser in einer weiter unten beschriebenen Weise weiterverarbeitet werden. Des weiteren empfängt die elektronische Steuereinheit **ECU** von als Rad-Drehzahlsensoren arbeitenden Signalgebern, wie sie zum Beispiel auch für den ABS-Betrieb erforderlich sind, die Geschwindigkeit der Räder **VL, VR, HL, HR** des KFZs charakteristische Signale **v(VL), v(VR), v(HL), v(HR).** Als Signalgeber für den Lenkwinkeleinschlag des Kraftfahrzeug-Lenkrades ist ein Drehwinkelgeber **LW** und als Signalgeber für die Stellung des Fahrpedals des KFZs ist ebenfalls ein Drehwinkelgeber **FP** mit der elektronischen Steuereinheit **ECU** verbunden. Die elektronische Steuereinheit **ECU** ist mit auf das Fahrverhalten des KFZs Einfluß nehmenden Steuergeräten in Form des Motormanagement oder der elektrischen oder elektrohydraulischen Bremsanlage verbunden, um diesen Ausgangssignale zuzuführen, welche von dem Fahrverhalten des vor dem eigenen KFZ befindlichen KFZs und ggf. der Fahrzeugumgebung abgeleitet sind. Der Radarsensor **RS** tastet den Raum vor dem KFZ kontinuierlich ab und erzeugt Signale, die für im vor dem KFZs liegenden Raum befindliche Objekte **X** hinsichtlich deren Abstand und Orientierung zu dem KFZ charakteristisch sind. Insbesondere werden die Geschwindigkeit **v_rel_X** des Objektes **X** relativ zur Geschwindigkeit **v** des eigenen KFZs, der Abstand **d_x** relativ zum eigenen Kraftfahrzeug, der Winkelversatz **Alpha_x** oder die Seitenablage relativ zur Fahrzeuglängsachse des eigenen KFZs kontinuierlich erfasst und in der elektronischen Steuereinheit **ECU** ausgewertet (siehe Fig. 2). Wie in Fig. 2 dargestellt, ist der mit dem Sensor abgetastete Raum vor dem KFZ etwa kegel- oder keulenförmig und hat abhängig von den tatsächlichen Umgebungs-Gegebenheiten eine Länge von etwa 200 - 250 Metern und einen Öffnungswinkel von etwa 12°. Zur Steigerung der Auswertesicherheit werden jedoch nur in einem Kernbereich von etwa 8 - 10° sich befindende Objekte betrachtet. Eine sichere Erfassung kann damit für Objekte erfolgen, die sich maximal im Abstand von etwa 200 +/- 30 Metern vom eigenen KFZ entfernt befinden bzw. vor diesem sich innerhalb oder unterhalb dieses Bereiches fortbewegen. Diese im wesentlichen rechteckige Fahrspur wird in der elektronischen Steuereinheit **ECU** als Datenstruktur nachgebildet und in einen Nahbereich (zum Beispiel etwa 0-50 Meter), einen Fernbereich (zum Beispiel 150+ Meter), und einen Mittelbereich (zum Beispiel 50 -150 Meter) unterteilt. Dabei können die Datensignale von speziellen für das erfindungsgemäße System im KFZ vorgesehenen Sensoren stammen oder von Sensoren, die auch für andere Kraftfahrzeug-Systeme (Bremssteuerung, "Elektronisches Lenkrad", EPS, oder dergl.) vorgesehen sind und in ein im KFZ vorgesehenes Bussystem (zum Beispiel CAN-BUS) ihre Daten einspeisen. In Fig. 3 ist veranschaulicht, wie die elektronische Steuereinheit **ECU** die empfangenen Datensignale aus den unterschiedlichen Sensoren verarbeitet und Daten erzeugt, die in Tabellen oder Beschreibungsobjekten abgelegt und ggf. laufend aktualisiert werden. Ein wesentlicher Teil des erfindungsgemäßen Systems besteht aus einer Objekttabelle **OT,** in der die im Raum vor dem KFZ befindlichen (beweglichen und ggf. auch statischen) Objekte mit ihren Attributen (zum Beispiel Geschwindigkeit relativ zur Geschwindigkeit des eigenen KFZs, der Abstand relativ zum eigenen Kraftfahrzeug, der Winkelversatz oder die Seitenablage relativ zur Fahrzeuglängsachse des eigenen KFZs, wie lange befindet sich ein bestimmtes Objekt bereits in der Objekttabelle **OT,** wie oft hat es einen Spurwechsel vorgenommen, etc.), also deren Objektbeschreibungen geführt werden. Aus der Objekttabelle **OT** und deren Historie **HIST**, also aus in der Vergangenheit liegenden Objektbeschreibungen wird eine FahrzeugUmgebungsbeschreibung **FUB** (bewegt sich das KFZ in Links- oder Rechtsverkehr, fährt es auf einer Autobahn, einer Landstraße oder im Stadtverkehr, wie viele Fahrspuren hat die derzeit von dem KFZ befahrene Straße, auf welcher Fahrspur befindet sich das KFZ derzeit, ist die derzeit von dem KFZ befahrene Straße kurvig, wenn ja in welchem Maß, oder verläuft die Straße geradlinig, etc.) erzeugt, aus der zusammen mit der Historie **HIST** der Objekttabelle **OT** und den aktuellen Daten in der Objektauswahl **OA** ein Objekt aus der Objekttabelle **OT** als Ziel-KFZ ausgewählt wird, das als "vorausfahrendes Kraftfahrzeug" herangezogen wird, um an dessen Fahrverhalten das eigene Fahrverhalten (Geschwindigkeit vsoll, Abstand **dsoll** etc.) anzupassen, wie dies in Fig. 4 gezeigt ist. Zur Festlegung der Mittellinie der eigenen Fahrspur im vor dem KFZ erfassten Raum wird der Krümmungsradius **R** der Bahnkurve des Schwerpunktes des eigenen KFZs anhand der Änderung der Winkelpeilung der voranfahrenden Objekte und der absoluten Lage der voranfahrenden Objekte gegenüber der momentan prädizierten Fahrspur in der elektronischen Steuereinheit **ECU** modifiziert. Das heißt, dass in der elektronischen Steuereinheit **ECU** für das eigene KFZ die Distanz gegenüber dem momentanen Ort auf der Fahrspur ermittelt wird, nach deren Zurücklegen sich der Krümmungsradius **R** der Bahnkurve des Schwerpunktes des eigenen KFZs ändert. Das Mass der Änderung wird dabei aus der Änderung der Winkelpeilung der voranfahrenden Objekte bzw. deren absoluter Lage gegenüber der momentan prädizierten Fahrspur bestimmt. Mit anderen Worten findet ein "vorausschauendes Fahren" statt, bei dem das eigene KFZ darauf vorbereitet werden kann, wann bzw. in welchem Abstand zur momentanen Position eine Verringerung der eigenen Geschwindigkeit angezeigt ist, da sich - auch - die vorausfahrenden Kraftfahrzeuge in eine Kurvensituation begeben. Um hierbei eine möglichst genaue Vorhersage zu treffen, wie sich der Krümmungsradius R der Bahnkurve des Schwerpunktes des eigenen KFZs verändert, werden die Lateralgeschwindigkeiten der sich im vor dem KFZ erfassten Raum bewegenden Objekte in der elektronischen Steuereinheit **ECU** ausgewertet und in der Objekttabelle **OT** als Attribut abgelegt und aktualisiert. Gleichermaßen wird mit der Aufenthaltsdauer der sich im vor dem KFZ erfassten Raum bewegenden Objekte sowie deren Geschwindigkeit und Abstand in Fahrtrichtung des eigenen KFZs verfahren, um den Krümmungsradius R in Abhängigkeit von deren Aufenthaltsdauer bzw. Geschwindigkeit und/oder Abstand vom eigenen KFZ zu modifizieren. In der Fahrzeugumgebungsbeschreibung **FUB** (Fig. 3) wird außerdem der Verlauf und die Breite der Fahrspur des eigenen KFZs im vor diesem liegenden Raum als Beschreibung abgelegt und aktualisiert. Wie in Fig. 4 und 5 veranschaulicht, wird in der Fahrzeugumgebungsbeschreibung **FUB** die Breite der eigenen Fahrspur abhängig vom Abstand zum eigenen KFZ in der elektronischen Steuereinheit **ECU** modifiziert, wobei die maximale Breite im Nahbereich und im Fernbereich geringer als im Mittelbereich ist. Dabei wird die Breite der eigenen Fahrspur nur an solchen Stellen im Raum vor dem eigenen KFZ in der elektronischen Steuereinheit **ECU** festgelegt, an denen sich im erfassten Raum vor dem eigenen KFZ auch Objekte befinden. Wie in Fig. 4, 5 ebenfalls veranschaulicht, wird in der Fahrzeugumgebungsbeschreibung (Fig. 2) die Breite der eigenen Fahrspur in Abhängigkeit von der Entfernung erfasster Objekte im Raum vor dem eigenen KFZ und der Orientierung einer Kurve in der elektronischen Steuereinheit **ECU** so modifiziert, daß in großer Entfernung die Breite auf der Kurvenaußenseite abnimmt und die Breite in mittlerer Entfernung auf der Kurveninnenseite zunimmt. Außerdem kann die Breite der eigenen Fahrspur in der elektronischen Steuereinheit **ECU** nach beiden Seiten an der Stelle verbreitert werden, an der sich ein Ziel-KFZ befindet, von dessen Fahrverhalten das Fahrverhalten des eigenen KFZs abhängig sein soll. Weiterhin wird in der Fahrzeugumgebungsbeschreibung **FUB** die eigene Fahrspur durch die elektronische Steuereinheit **ECU** in Abhängigkeit von der Dauer, mit der das Fahrverhalten des eigenen KFZs vom Fahrverhalten dieses Ziel-KFZs abhängig ist, nach beiden Seiten an der Stelle verbreitert, an der sich das Ziel-KFZ befindet (Siehe Fig. 5). In entsprechender Weise wird die Breite der eigenen Fahrspur in der elektronischen Steuereinheit (ECU) in Abhängigkeit von der Geschwindigkeit des eigenen KFZs und/oder von der Kurvigkeit der Straße modifiziert, auf der sich das eigene KFZ befindet. Für die Bestimmung der Kurvigkeit wird weiter unten eine Vorgehensweise gemäß der Erfindung erläutert. Ein weiteres Merkmal, das bei der Auswahl eines Objektes als Ziel-KFZ eine Rolle spielt, ist dessen Fahrspur. Dazu werden die im Raum vor dem eigenen KFZ befindlichen Objekte hinsichtlich ihrer momentanen Position im Vergleich zur Fahrspurbreite im entsprechenden Abstand zum eigenen KFZ klassifiziert. Vor dem eigenen KFZ erfasste, sich bewegende Objekte werden in der elektronischen Steuereinheit **ECU** als Objekte in der eigenen Fahrspur klassifiziert, wenn ein weiter als eine Mindestentfernung entferntes Objekt während eines vorbestimmten Zeitrahmens eine Auftrittsdauer in der eigenen Fahrspur hat, die zur Summe der Auftrittsdauer in einer oder beiden Nachbarspuren ein Verhältnis hat, das einen Schwellenwert überschreitet. In diesem Fall wird dieses Objekt mit den entsprechenden Attributen in der Objekttabelle **OT** abgelegt. Die Klassifizierung eines KFZs als zum Beispiel zur mittleren Fahrspur gehörig - in der sich auch das eigene KFZ befindet - setzt dabei voraus, dass es sich innerhalb des für den momentanen Abstand des KFZs Korridors mit der entsprechenden Breite befindet. Fährt es links außerhalb des Korridors der die eigene Fahrspur begrenzt, wird es als in der linken Spur fahrend klassifiziert; fährt es rechts außerhalb des Korridors der die eigene Fahrspur begrenzt, wird es als in der rechten Spur fahrend klassifiziert (siehe zum Beispiel Fig. 5). In der Fig. 5a ist veranschaulicht, mit welcher Wahrscheinlichkeitsverteilung ein KFZ in einer linken, mittleren oder rechten Fahrspur anzutreffen ist. Ein entsprechender Wert wir in der Objekttabelle **OT** abgelegt und für jedes der Objekte aktualisiert. Der vorbestimmte Zeitrahmen kann dabei in Abhängigkeit von der Geschwindigkeit des eigenen KFZs in der elektronischen Steuereinheit **ECU** modifiziert und in der Objekttabelle **OT** abgelegt werden. Außerdem kann der Schwellenwert mit geringer werdender Entfernung des Objektes von dem eigenen KFZ in der elektronischen Steuereinheit **ECU** verringert werden. Weiterhin wird die Aufenthaltsdauer aller Objekte für die vorhandenen Fahrspuren in Bezug auf die eigene Fahrspur ermittelt und über die Zeit gewichtet. Dies wird als Attribut in der Objekttabelle **OT** abgelegt. Zeitlich neuere Auftritte von Objekten in der Fahrspur des eigenen KFZs werden höher bewertet als zurückliegende Aufritte, und räumlich entfernt liegende Auftritte von Objekten in der Fahrspur des eigenen KFZs werden geringer bewertet als räumlich näher liegende Auftritte. Aus den vorhandenen Fahrspuren werden jeweils maximal zwei sich bewegende Objekte als Prioritäts-Objekte in der Objekttabelle **OT** durch die elektronische Steuereinheit **ECU** ausgewählt und mit einer entsprechenden Kennzeichnung als Attribut in der Objekttabelle **OT** versehen, wenn sie während eines über einem Mindestwert liegenden Zeitraums als sich vor dem eigenen KFZ bewegend erfasst wurden. Diese jeweilige Dauer wird für sehr nahe zum eigenen KFZ (0 - 30 m) befindliche Objekte und sehr fern zum eigenen KFZ (120 - 200m) befindliche Objekte geringer gewichtet und dazwischen liegende Objekte stärker gewichtet. Für jedes derart gekennzeichnete Prioritäts-Objekt in der Objekttabelle **OT** wird durch die elektronische Steuereinheit **ECU** ermittelt, wie weit jedes Prioritäts-Objekt seine seitliche Lage relativ zur Mittellinie der Fahrspur des eigenen KFZs verändert. Als Änderungswert der Fahrspur des eigenen KFZs im jeweiligen Abstand zum eigenen KFZ wird durch die elektronische Steuereinheit **ECU** die Summe der Mittelwerte der seitlichen Lageänderungen der Prioritäts-Objekte ermittelt und ebenfalls in der Objekttabelle **OT** abgelegt. Durch die Objektauswahl **OA** (Fig. 4) wird in der elektronischen Steuereinheit **ECU** aus den Prioritäts-Objekten dasjenige als Ziel-KFZ auswählt, von dessen Fahrverhalten das Fahrverhalten des eigenen KFZs abhängig sein soll, welches sich in der Fahrspur des eigenen KFZs bewegt, eine Bewegungsrichtung über Grund hat, die im wesentlichen mit der Bewegungsrichtung des eigenen KFZs übereinstimmt; und während einer vorbestimmten Zeitdauer, welche aus der Objekttabelle **OT** und deren Historie **HIST** ausgelesen wird, im Raum vor dem eigenen KFZ erfasst wurde. Dabei wird in der Objekttabelle **OT** für jedes der Prioritäts-Objekte auch die Quergeschwindigkeit relativ zur Mittellinie der eigenen Fahrspur als Attribut mitgeführt und aktualisiert. Dies erlaubt die Auswahl des Ziel-KFZs auch nach dem Kriterium, dass diese Quergeschwindigkeit einen ggf. auch in Abhängigkeit vom Abstand des jeweiligen Objektes zum eigenen KFZ veränderbaren Schwellenwert nicht überschreitet. Weiterhin wird, wie in Fig. 6 gezeigt, als ein Attribut in der Objekttabelle **OT** für jedes der als Prioritäts-Objekte ausgewählten Objekte die Rauschamplitude des Peilwinkels gegenüber der Mittellängsachse des eigenen KFZs aufgezeichnet und ggf. in der Historie **HIST** mitgeführt. Damit ist es möglich, zu jedem der Prioritäts-Objekte in der elektronischen Steuereinheit **ECU** den zeitlichen Verlauf der Rauschamplitude des Peilwinkels auszuwerten. Erfindungsgemäß wird dazu das Rauschsignal Tiefpass-gefiltert um kurze Winkelausschläge auszublenden. Bei Überschreiten eines entfernungsabhängigen Schwellenwertes wird dieses Prioritäts-Objekt von der Auswahl als Ziel-Kraftfahrzeug, von dessen Fahrverhalten das Fahrverhalten des eigenen KFZs abhängig sein soll, ausgeschlossen. Gleichermaßen wird ein Prioritäts-Objekt von der Auswahl als Ziel-Kraftfahrzeug, von dessen Fahrverhalten das Fahrverhalten des eigenen KFZs abhängig sein soll, ausgeschlossen, wenn dessen Abstand zum eigenen KFZ größer ist als ein Entfernungs-Schwellenwert, der Absolutwert des Peilwinkels zu diesem Prioritäts-Objekt größer ist als ein Winkel-Schwellenwert (zum Beispiel 4°), und dieses Prioritäts-Objekt bisher nicht als Ziel-KFZ ausgewählt war. Auch hierzu ist die kontinuierliche Aufzeichnung der Rauschamplitude des Peilwinkels gegenüber der Mittellängsachse des eigenen KFZs als Attribut in der Objekttabelle **OT** für jedes der als Prioritäts-Objekte ausgewählten Objekte und ggf. deren Mitführen in der Historie **HIST** sehr nützlich. In der elektronischen Steuereinheit **ECU** wird ein Spurwechsel des eigenen KFZs daran erkannt, dass die Änderung des Peilwinkels zum Ziel-Kraftfahrzeug, von dessen Fahrverhalten das Fahrverhalten des eigenen KFZs abhängig sein soll, einen bestimmten Schwellenwert überschreitet und im wesentlichen gleich der Drehrate des eigenen KFZs mit inversem Vorzeichen ist. Die Drehrate des eigenen KFZs ist aus dem Signal des Gierratensensors (siehe Fig.1) ableitbar, der ein für die Drehrate dPSI/dt des KFZs um dessen Hochachse charakteristisches Signal liefert. Auch für diese Auswertung ist die kontinuierliche Aufzeichnung des Peilwinkels des Ziel-KFZs gegenüber der Mittellängsachse des eigenen KFZs und dessen Rauschamplitude als Attribut in der Objekttabelle **OT** und deren Mitführen in der Historie **HIST** erforderlich. Wie in Fig. 7 gezeigt, wird in der elektronischen Steuereinheit ECU eine mit der Krümmung der Fahrspur des eigenen KFZs in Beziehung stehende Größe **K(t)** als Eingangssignal parallel mehreren TP-Filtern **T1, T2, T3, T4** 1**.** Ordnung mit unterschiedlichen Zeitkonstanten zugeführt. Diese Größe kann zum Beispiel der in der oben beschriebenen Weise ermittelte Kurvenradius bzw. dessen Kehrwert oder die Drehrate des Fahrzeugs sein. Die Ausgangssignale der TP-Filter und das Eingangssignal werden jeweils miteinander verglichen um im Straßenverlauf des eigenen KFZs ein Übergang von einer Kurve einer Orientierung zu einer Kurve entgegengesetzter Orientierung zu erkennen. Dies geschieht in der elektronischen Steuereinheit **ECU** in der Weise, dass wenn die Ausgangssignale einen jeweiligen Mindestabstand zu einander haben und das Ausgangssignal eines jeweiligen TP-Filters geringer ist als das Ausgangssignal eines TP-Filters mit einer geringeren Zeitkonstante und größer ist als Ausgangssignal eines TP-Filters mit einer größeren Zeitkonstante, oder das Ausgangssignal eines jeweiligen TP-Filters größer ist als das Ausgangssignal eines TP-Filters mit einer geringeren Zeitkonstante und geringer ist als Ausgangssignal eines TP-Filters mit einer größeren Zeitkonstante, ein Übergang erkannt wird. In Fig. 7 ist dies in der Weise veranschaulicht, dass zu zwei Zeitpunkten **X, Y** die im Beispiel verwendeten vier Vergleiche durchgeführt werden. Wenn die einzelnen Ergebnisse (Ausgangssignale **a, b, c, d)** der vier Vergleiche von 1, 1, 1, 1 nacheinander auf 0, 0, 0, 0 wechseln, ist daraus abzuleiten, dass ein Kurvenübergang stattgefunden hat Ein weiterer Aspekt des erfindungsgemäßen Systems besteht darin, festzustellen in welcher Umgebung sich das eigene KFZ derzeit befindet. Dazu wird in der elektronischen Steuereinheit **ECU** ein Wert "Umgebungs-Geschwindigkeit" in der Fahrzeugumgebungsbeschreibung **FUB** (siehe Fig. 2) geführt und regelmäßig aktualisiert. Zur Unterscheidung der Art der Straße, auf der das eigene KFZ fährt, werden für drei unterschiedliche Straßen-Umgebungen (Stadtverkehr, Landstraße, Autobahn) in der elektronischen Steuereinheit **ECU** Kennwerte mit fließenden Grenzen ermittelt. Dieser Wert wird von einem momentanen Betrag an die tatsächlich gefahrene Geschwindigkeit des eigenen KFZs in Stufen angenähert. Die tatsächlich gefahrene Geschwindigkeit des eigenen KFZs wird dabei von dem Fahrpedalsignal **FP** (siehe Fig.1) bzw. einem (nicht weiter veranschaulichten) Tachometersignal abgeleitet. Erfindungsgemäß erfolgt eine Annäherung von einem höheren Wert als dem momentanen Betrag der tatsächlich gefahrenen Geschwindigkeit mit einer ersten Geschwindigkeitsrate und eine Annäherung von einem niedrigeren Wert als dem momentanen Betrag der tatsächlich gefahrenen Geschwindigkeit mit einer zweiten, erheblich höheren als der ersten Geschwindigkeitsrate. Außerdem wird der Wert "Umgebungs-Geschwindigkeit" von einem momentanen Betrag an einen Wert, der im Bereich Autobahn (zum Beispiel 150 kmh) liegt, in Stufen angenähert, wenn sich vor dem eigenen KFZ wenigstens zwei im wesentlichen nebeneinander her fahrende andere Objekte befinden. Weiterhin wird der Wert "Umgebungs-Geschwindigkeit" von einem momentanen Betrag an einen unteren Grenzwert in Stufen angenähert. Wenn sich aus dem Wert "Umgebungs-Geschwindigkeit" und der momentanen Drehrate des eigenen KFZs eine Querbeschleunigung ergäbe, die einen Schwellenwert übersteigt, wird der Wert "Umgebungs-Geschwindigkeit" mit einer vierten, erheblich höheren als der dritten Geschwindigkeitsrate solange reduziert, bis diese Querbeschleunigung den Schwellenwert nicht mehr übersteigt. Schließlich ist der Wert "Umgebungs-Geschwindigkeit" auf ein vorbestimmbares Vielfaches (zum Beispiel 0.5 - 1.5) der Wunschgeschwindigkeit des eigenen KFZs sowie auf einen vorbestimmbaren unteren Schwellenwert (zum Beispiel 40 kmh) und einen vorbestimmbaren oberen Schwellenwert (zum Beispiel 160 kmh) begrenzt. Der Wert "Umgebungs-Geschwindigkeit" ist in mehrerlei Hinsicht für die Funktionsweise des erfindungsgemäßen Systems wichtig, da er auf andere Parameter Einfluß hat bzw. zu deren Bestimmung, Modifizierung bzw. Aktualisierung herangezogen wird. Andererseits haben auch weitere, aus dem Fahrverhalten des eigenen oder fremder Kraftfahrzeuge abgeleitete Größen, die einen Rückschluß auf die Umgebung zulassen, einen Einfluß auf diese Parameter. Eine dieser abgeleiteten Größen ist der Krümmungsverlauf der Straße, auf der sich das eigene KFZ derzeit befindet; mathematisch ausgedrückt ist das der Verlauf des Kehrwertes des Kurvenradius über dem Weg. Erfindungsgemäß wird dieser Krümmungsverlauf nach dem Weg differenziert. In Abhängigkeit von dem Ergebnis wird ein Kennwert "Kurvigkeit" ermittelt. Abhängig vom Ergebnis der Differentiation des Krümmungsverlaufes nach dem Weg wird bei einer Abfolge von Kurven-Wechseln über eine bestimmte Wegstrecke die "Kurvigkeit" mit einer vorbestimmten, von der Geschwindigkeit des eigenen KFZs und/oder von dem Abstand zum Ziel-KFZ abhängigen Rate verändert. In der elektronischen Steuereinheit **ECU** wird außerdem der Krümmungsverlauf nach dem Weg differenziert und bei langen geraden Abschnitten über einer bestimmten Wegstrecke in Abhängigkeit von dem Ergebnis der Wert "Kurvigkeit" mit einer vorbestimmten, vorzugsweise von der Geschwindigkeit des eigenen KFZs und/oder von dem Abstand zum Ziel-KFZ und/ oder der Länge des geraden Abschnittes abhängigen Rate verringert. Gleichermaßen wird, wenn das Durchfahren einer S-Kurve erkannt wird, also zwei gegenläufige Kurvenabschnitte ohne ein oder nur mit einem relativ kurzen geraden Zwischenstück, in Abhängigkeit von dem Ergebnis der Wert "Kurvigkeit" mit hoher Rate erhöht. Ein weiterer, den Wert "Kurvigkeit" beeinflussender Faktor ist das Integral des Drehratensignals **dPSI/dt** des KFZs um dessen Hochachse, das die Richtungsänderung des eigenen Fahrzeugs über den Weg wiedergibt. In Abhängigkeit von diesem wird der Wert "Kurvigkeit" mit einer hohen Rate um einen dynamischen Anteil erhöht. Bei Wegfallens des über einem vorbestimmten Wert liegenden Drehratensignals wird der dynamische Anteil wieder - auf den vorherigen Wert - zurückgeführt. Das erfindungsgemäße System sieht dabei vor, den dynamischen Anteil bei Rechtsverkehr nur für Rechtskurven und bei Linksverkehr nur für Linkskurven zu dem Wert "Kurvigkeit" zu addieren bzw. wieder abzuziehen. Die Art und Weise, wie Rechtsverkehr oder Linksverkehr erkannt wird, ist weiter unten beschrieben. Der dynamische Anteil wird außerdem abhängig von der Geschwindigkeit des eigenen KFZs modifiziert. In Abhängigkeit von der so ermittelten "Kurvigkeit" kann die Geometrie des Fahrkorrldors zur Auswahl des für die Regelung relevanten Ziels dahingehend angepasst (z.B. verkürzt) werden, dass eine fehlerhafte Zielauswahl in Kurvenübergängen vermieden wird. Gleichermaßen werden bei der Auswahl als Ziel-KFZ solche bevorzugt, die relativ wenig "hin- und herdriften". Ein weiteres Kriterium bei der Auswahl eines Prioritäts-Objektes besteht darin, dass ein Objekt, welches sich im Erfassungsraum vor dem eigenen KFZ befindet, einen vorbestimmten Abstand unterschreitet und sich nicht in der Fahrspur des eigenen KFZs befindet, von der Auswahl als Prioritäts-Objekt ausgeschlossen wird. Auch ein Objekt, das zur Mittel-Längsachse des eigenen KFZs sich ausserhalb eines vorbestimmten Winkels befindet oder einen vorbestimmten Winkel überschreitet, wird von der Auswahl als Prioritäts-Objekt ausgeschlossen. Zur Erkennung von Links- oder Rechtsverkehr wird für vor dem eigenen KFZ in den vorhandenen Fahrspuren herfahrende Kraftfahrzeuge in der elektronischen Steuereinheit **ECU** deren Geschwindigkeit ermittelt und hieraus ein Kennwert abgeleitet, der angibt, ob das eigene KFZ sich in Links- oder in Rechtsverkehr befindet. Dies ist in Fig. 8 veranschaulicht, wobei in Fig. 8 oben eine Linksverkehrssituation (wie zum Beispiel in Großbritannien oder Japan) und in Fig. 8 unten eine Rechtsverkehrssituation (wie zum Beispiel in Kontinental-Europa oder in den USA) gezeigt ist. Um zu erkennen wo sich das eigene KFZ befindet, wird die von einer vorbestimmten Anzahl der vor dem eigenen KFZ in den vorhandenen Fahrspuren herfahrenden Kraftfahrzeuge zurückgelegte Strecke oder eine damit korrelierte Größe ermittelt und zu der entsprechenden Größe für das eigene KFZ in Beziehung gesetzt. Dazu wird der Kennwert als Integral der Differenzgeschwindigkeiten der Kraftfahrzeuge einer ersten, vorzugsweise der linken Fahrspur, und der Differenzgeschwindiglkeiten der Kraftfahrzeuge einer zweiten, vorzugsweise der rechten Fahrspur, in Bezug auf die Geschwindigkeit des eigenen Fahrzeugs bestimmt. Zur Erhöhung der Erkennungssicherheit wird ein oberer Schwellenwert und ein unterer Schwellenwert bestimmt, wobei die elektronische Steuereinheit **ECU** ein Signal "Rechtsverkehr" erzeugt und in der Fahrzeugumgebungsbeschreibung **FUB** abspeichert, wenn der Kennwert den oberen Schwellenwert überschreitet, und ein Signal "Linksverkehr" erzeugt und in der Fahrzeugumgebungsbeschreibung **FUB** abspeichert, wenn der Kennwert den unteren Schwellenwert unterschreitet. Dabei werden zur Erkennung von Links- oder Rechtsverkehr nur Geschwindigkeiten von Kraftfahrzeugen berücksichtigt, die einen vorbestimmten Schwellenwert (zum Beispiel 10 km/h) überschreiten. Außerdem werden zur Erkennung von Links- oder Rechtsverkehr nur dann vor dem eigenen KFZ herfahrende Kraftfahrzeuge ausgewertet, wenn der Radius der Fahrspur einen vorbestimmten Schwellenwert (zum Beispiel 25 - 50 m) überschreitet. Bei der Auswertung zur Erkennung von Links- oder Rechtsverkehr werden Kennwerte von Kraftfahrzeugen mit zur Geschwindigkeit des eigenen KFZs negativer Relativgeschwindigkeit, deren Betrag größer ist als die Geschwindigkeit des eigenen KFZs mit einem Gewichtungsfaktor versehen. Über den Gewichtungsfaktor wird festgelegt in welchem Maße Gegenverkehr berücksichtigt wird, wobei für die als Gegenverkehr erkannten Fahrzeuge die Relativgeschwindigkeit negiert betrachtet wird. Eine weitere Funktionalität des erfindungsgemäßen System ist mit Bezug auf Fig. 9 nachstehend erläutert. Wenn ein Ziel-KFZ den Erfassungsraum vor dem eigenen KFZ verlässt, wird in der elektronischen Steuereinheit **ECU** ein Ansteuersignal erzeugt, das die momentane Geschwindigkeit oder die momentane Beschleunigung des eigenen KFZs wenigstens für eine Strecke auf einen Wert begrenzt, die maximal dem Abstand **X** zwischen dem eigenen KFZ und dem Ziel-KFZ zum Zeitpunkt dessen Verlassens des Erfassungsraums im wesentlichen entspricht. Dazu wird kontinuierlich der Abstand X zwischen dem eigenen KFZ und dem Ziel-KFZ erfasst. Sofern das Ziel-KFZ den Erfassungsraum des Radarsensors **RS** des eigenen KFZs verläßt wird zum Zeitpunkt des Verlassens des Erfassungsraums um eine Verkürzungsstrecke DX auf einen effektiven Abstand **Xeff** verringert. Diese Verkürzungsstrecke DX ist von der Umgebung (Autobahn, Landstraße, Stadtverkehr), der Geschwindigkeit des Ziel-KFZs zum Zeitpunkt des Verlassens des Erfassungsraums, der momentanen Geschwindigkeit des eigenen KFZs, den Kurvenradien von innerhalb eines vorbestimmten Zeitraums in der Vergangenheit bereits durchfahrener Kurven, oder dergl. abhängig. Da das Ziel-KFZ vor dem eigenen KFZ "verschwindet", wenn es in eine Kurve fährt während das eigene KFZ noch geradeaus fährt, hätte dies für das eigene KFZ zur Folge, dass das ACC-System die Geschwindigkeit erhöht. Damit wäre für die Einfahrt in die Kurve die Geschwindigkeit ggf. zu hoch, so dass der Fahrer stark abbremsen müsste. Diesen Effekt unterbindet die erfindungsgemäße Funktionalität, indem ein Ansteuersignal erzeugt wird, das dieses Ansteigen der Geschwindigkeit für eine vorbestimmte Zeitdauer unterbindet. Das Ansteuersignal ist dabei für eine maximale Zeitdauer charakteristisch - und wird dementsprechend lang ausgegeben -, die sich aus der momentanen Geschwindigkeit des eigenen KFZs und dem Abstand **X** zwischen dem eigenen KFZ und dem Ziel-KFZ zum Zeitpunkt dessen Verlassens des Erfassungsraum oder dem effektiven Abstand **Xeff** ergibt

## Patentansprüche

1. System zur Auswertung der Fahrumgebung eines KFZs und zur Beeinflussung der Geschwindigkeit des KFZs in seiner eigenen Fahrspur, mit
- einer elektronischen Steuereinheit (ECU), und mit
- einem ein für die Wunschgeschwindigkeit des KFZs charakteristisches Signal erzeugenden Signalgeber,
- einem ein für die Drehrate des KFZs um dessen Hochachse charakteristisches Signal erzeugenden Signalgeber,
-- einem Signalgeber, der für in dem in Fahrtrichtung des KFZs vor dem KFZ liegenden Raum befindliche Objekte hinsichtlich deren Abstand und Orientierung zu dem KFZ charakteristisches Signal erzeugt, das
--- die Geschwindigkeit relativ zur Geschwindigkeit des eigenen KFZs, und/oder
--- den Abstand relativ zum eigenen Kraftfahrzeug, und/oder
--- den Winkelversatz oder die Seitenablage relativ zur Fahrzeuglängsachse des eigenen KFZs wiedergibt, und
-- einem ein für die Geschwindigkeit wenigstens eines Rades des KFZs charakteristisches Signal erzeugenden Signalgeber mit welchen Signalgebern die elektronische Steuereinheit (ECU) verbunden ist, und
- mit wenigstens einem auf das Fahrverhalten des KFZs Einfluß nehmenden Steuergerät, mit welchem die elektronische Steuereinheit auch verbunden ist, um diesem Ausgangssignale zuzuführen, welche von dem Fahrverhalten des vor dem eigenen KFZ befindlichen KFZs abgeleitet sind, bei dem zur Unterscheidung der Art der Straße, auf der das eigene KFZ fährt, für wenigstens zwei unterschiedliche Straßen-Umgebungen (Stadtverkehr, Landstraße, Autobahn) in der elektronischen Steuereinheit (ECU) Kennwerte mit fließenden Grenzen ermittelt werden, wobei eine den jeweiligen Kennwert beeinflussende Größe die aus den Geschwindigkeiten der im Raum vor dem eigenen KFZ erfassten Objekte ermittelte, vorzugsweise durch Mittelwertbildung bestimmte, "Umgebungs-Geschwindigkeit" ist.

2. System nach dem vorhergehenden Anspruch, bei dem in der elektronischen Steuereinheit (ECU) der Wert "Umgebungs-Geschwindigkeit" von einem momentanen Betrag an die tatsächlich gefahrene Geschwindigkeit des eigenen KFZs über eine vorbstimmte Funktion angenähert wird, wobei vorzugsweise eine Annäherung von einem höheren Wert als dem momentanen Betrag der tatsächlich gefahrenen Geschwindigkeit mit einer ersten Geschwindigkeitsrate und eine Annäherung von einem niedrigeren Wert als dem momentanen Betrag der tatsächlich gefahrenen Geschwindigkeit mit einer zweiten, vorzugsweise erheblich höheren als der ersten Geschwindigkeitsrate erfolgt.

3. System nach einem der vorhergehenden Ansprüche, bei dem in der elektronischen Steuereinheit (ECU) der Wert "Umgebungs-Geschwindigkeit" von einem momentanen Betrag an die tatsächlich gefahrene Geschwindigkeit des eigenen KFZs über eine vorbestimmte Funktion angenähert wird, wobei, wenn sich vor dem eigenen KFZ wenigstens zwei im wesentlichen nebeneinander her fahrende andere Objekte befinden und das eigene Kraftfahrzeuge eine tatsächliche Geschwindigkeit fährt, die im Bereich "Landstraße" liegt, eine Erhöhung des Wertes "Umgebungs-Geschwindigkeit" mit einer dritten, vorzugsweise erheblich höheren als der zweiten Geschwindigkeitsrate erfolgt.

4. System nach einem der vorhergehenden Ansprüche, bei dem in der elektronischen Steuereinheit (ECU) der Wert "Umgebungs-Geschwindigkeit" von einem momentanen Betrag an einen unteren Grenzwert in Stufen angenähert wird, wobei, wenn sich aus dem Wert "Umgebungs-Geschwindigkeit" und der momentanen Drehrate des eigenen KFZs eine Querbeschleunigung ergäbe, die einen Schwellenwert übersteigt, wird der Wert "Umgebungs-Geschwindigkeit" mit einer vierten, vorzugsweise erheblich höheren als der dritten Geschwindigkeitsrate auf den Schwellenwert reduziert.

5. System nach einem der vorhergehenden Ansprüche, bei dem in der elektronischen Steuereinheit (ECU) der Wert "Umgebungs-Geschwindigkeit" auf ein vorbestimmbares Vielfaches der Wunschgeschwindigkeit des eigenen KFZs begrenzt ist.

6. System nach einem der vorhergehenden Ansprüche, bei dem in der elektronischen Steuereinheit (ECU) der Wert "Umgebungs-Geschwindigkeit" auf einen vorbestimmbaren unteren Schwellenwert und einen vorbestimmbaren oberen Schwellenwert begrenzt ist.

7. System nach einem der vorhergehenden Ansprüche, bei dem in der elektronischen Steuereinheit (ECU) der Krümmungsverlauf nach dem Weg differenziert wird und in Abhängigkeit von dem Ergebnis der Wert "Umgebungs-Geschwindigkeit" mit einer vorbestimmten, vorzugsweise von der Geschwindigkeit des eigenen KFZs und/oder von dem Abstand zum Ziel-KFZ abhängigen Rate verringert wird.

8. System nach einem der vorhergehenden Ansprüche, bei dem in der elektronischen Steuereinheit (ECU) der Krümmungsverlauf nach dem Weg differenziert wird und bei einer Abfolge einer Kurven-Wechseln über einer bestimmten Wegstrecke in Abhängigkeit von dem Ergebnis der Wert "Umgebungs-Geschwindigkeit" mit einer vorbestimmten, vorzugsweise von der Geschwindigkeit des eigenen KFZs und/oder von dem Abstand zum Ziel-KFZ abhängigen Rate verringert wird.

9. System nach einem der vorhergehenden Ansprüche, bei dem in der elektronischen Steuereinheit (ECU) der Krümmungsverlauf nach dem Weg differenziert wird und bei langen geraden Abschnitten über einer bestimmten Wegstrecke in Abhängigkeit von dem Ergebnis der Wert "Umgebungs-Geschwindigkeit" mit einer vorbestimmten, vorzugsweise von der Geschwindigkeit des eigenen KFZs und/oder von dem Abstand zum Ziel-KFZ abhängigen Rate erhöht wird.

10. System nach einem der vorhergehenden Ansprüche, bei dem in der elektronischen Steuereinheit (ECU) der Krümmungsverlauf nach dem Weg differenziert wird und bei S-Kurven (zwei gegenläufige Kurvenabschnitte ohne ein oder nur mit einem relativ kurzen geraden Zwischenstück) in Abhängigkeit von dem Ergebnis der Wert "Umgebungs-Geschwindigkeit" mit hoher Rate verringert wird.

11. System nach einem der vorhergehenden Ansprüche, bei dem in der elektronischen Steuereinheit (ECU) bei Vorliegens eines Signals, das eine über einem vorbestimmten Wert liegende Drehrate wiedergibt, der Wert "Umgebungs-Geschwindigkeit" mit einer hohen Rate um einen dynamischen Anteil verringert wird und bei Wegfallens des über einem vorbestimmten Wert liegenden Drehratensignals der dynamische Anteil wieder zurückgeführt wird.

12. System nach dem vorhergehenden Anspruch, bei dem in der elektronischen Steuereinheit (ECU) der dynamische Anteil bei Rechtsverkehr nur für Rechtskurven und bei Linksverkehr nur für Linkskurven von der Umgebungs-Geschwindigkeit abgezogen bzw. wieder zugeführt wird.

13. System nach einem der vorhergehenden Ansprüche, bei dem in der elektronischen Steuereinheit (ECU) der dynamische Anteil abhängig von der Geschwindigkeit des eigenen KFZs und/oder von dem Abstand zum Ziel-KFZ modifiziert wird.

## Claims

1. System for evaluating the driving environment of a motor vehicle and for influencing the speed of the motor vehicle in its own lane, comprising
- an electronic control unit (ECU), and comprising
-- a signal generator generating a signal which is characteristic of the desired speed of the motor vehicle,
-- a signal generator generating a signal which is characteristic of the yaw rate of the motor vehicle about its vertical axis,
-- a signal generator which generates, for objects located in the space lying in front of the motor vehicle in its direction of travel, a signal which is characteristic of the distance and orientation of the objects with respect to the motor vehicle and which reproduces
-- the speed relative to the speed of the driver's motor vehicle, and/or
-- the distance relative to the driver's motor vehicle, and/or
-- the angular offset or the lateral deviation relative to the vehicle longitudinal axis of the driver's motor vehicle, and
- a signal generator generating a signal which is characteristic of the speed of at least one wheel of the motor vehicle with which signal generators the electronic control unit (ECU) is connected, and
- at least one control device, which influences the road behaviour of the motor vehicle and with which the electronic control unit is connected in order to supply this with output signals which are derived from the road behaviour of the motor vehicle located in front of the driver's motor vehicle, with characteristic values having fluid boundaries being established in the electronic control unit (ECU) for at least two different road environments (town traffic, country road, highway) in order to distinguish the type of road on which the driver's motor vehicle is travelling, wherein a quantity influencing the respective characteristic value is the "environmental speed" established from the speeds of the objects detected in the space in front of the driver's motor vehicle and preferably determined by averaging.

2. System according to the preceding Claim, in which the "environmental speed" value of an instantaneous magnitude is approximated to the speed at which the driver's motor vehicle is actually travelling via a predetermined function in the electronic control unit (ECU), wherein an approximation of a value higher than the instantaneous magnitude of the speed at which the motor vehicle is actually travelling with a first speed rate and an approximation of a value lower than the instantaneous magnitude of the speed at which the motor vehicle is actually travelling with a second speed rate, preferably significantly higher than the first speed rate, preferably take place.

3. System according to one of the preceding Claims, in which the "environmental speed" value of an instantaneous magnitude is approximated to the speed at which the driver's motor vehicle is actually travelling via a predetermined function in the electronic control unit (ECU), wherein, when at least two other objects, substantially travelling side by side, are located in front of the driver's motor vehicle and the driver's motor vehicle is travelling at an actual speed which lies in the "country road" range, the "environmental speed" value is raised with a third speed rate which is preferably significantly higher than the second speed rate.

4. System according to one of the preceding Claims, in which the "environmental rate speed" value of an instantaneous magnitude is approximated to a lower limit value in steps, in the electronic control unit (ECU), wherein, should a lateral acceleration which exceeds a threshold value result from the "environmental speed" value and the instantaneous yaw rate of the driver's motor vehicle, the "environmental speed" value is reduced to the threshold value with a fourth speed which is preferably significantly higher than the third speed rate.

5. System according to one of the preceding Claims, in which the "environmental speed" value is limited to a predeterminable multiple of the desired speed of the driver's motor vehicle in the electronic control unit (ECU).

6. System according to one of the preceding Claims, in which the "environmental speed" value is limited to a predeterminable lower threshold value and a predeterminable upper threshold value in the electronic control unit (ECU).

7. System according to one of the preceding Claims, in which the bend characteristic is differentiated according to the distance travelled and, according to the result, the "environmental speed" value is reduced with a predetermined rate which preferably depends on the speed of the driver's motor vehicle and/or on the distance from the target motor vehicle in the electronic control unit (ECU).

8. System according to one of the preceding Claims, in which the bend characteristic is differentiated according to the distance travelled and, in the case of a sequence of bend changes over a certain distance, according to the result, the "environmental speed" value is reduced with a predetermined rate which preferably depends on the speed of the driver's motor vehicle and/or on the distance from the target motor vehicle in the electronic control unit (ECU).

9. System according to one of the preceding Claims, in which the bend characteristic is differentiated according to the distance travelled and, in the case of long straight sections over a certain distance, according to the result, the "environmental speed" value is increased with a predetermined rate which preferably depends on the speed of the driver's motor vehicle and/or on the distance from the target motor vehicle in the electronic control unit (ECU).

10. System according to one of the preceding Claims, in which the bend characteristic is differentiated according to the distance travelled and, in the case of double bends (two contradirectional bend sections without any or with just one relatively short straight intermediate stretch), according to the result, the "environmental speed" value is reduced with a high rate in the electronic control unit (ECU).

11. System according to one of the preceding Claims, in which, given a signal which reproduces a yaw rate lying above a predetermined value, the "environmental speed" value is reduced with a high rate by a dynamic component and, in the absence of the yaw rate signal lying above the predetermined value, the dynamic component is restored in the electronic control unit (ECU).

12. System according to the preceding Claim, in which, in the case of right-hand traffic, the dynamic component is only subtracted from the environmental speed or restored for right-hand bends and, in the case of left-hand traffic, the dynamic component is only subtracted from the environmental speed or restored for left-hand bends in the electronic control unit (ECU).

13. System according to one of the preceding Claims, in which the dynamic component is modified according to the speed of the driver's motor vehicle and/or the distance from the target motor vehicle in the electronic control unit (ECU).

## Revendications

1. Système pour évaluer l'environnement d'un véhicule automobile en marche et pour influencer la vitesse du véhicule automobile dans sa propre voie de circulation, comprenant
- une unité de contrôle électronique (ECU) et
- un générateur de signaux engendrant un signal caractéristique de la vitesse souhaitée du véhicule automobile,
- un générateur de signaux engendrant un signal caractéristique du taux de giration du véhicule automobile autour de son axe vertical,
- un générateur de signaux engendrant un signal caractéristique pour les objets se trouvant dans l'espace devant le véhicule automobile, vu dans le sens de marche du véhicule automobile, en ce qui concerne leur distance et leur orientation par rapport au véhicule automobile, ce signal représentant
- la vitesse par rapport à la vitesse du propre véhicule automobile, et/ou
- la distance par rapport au propre véhicule automobile, et/ou
- le décalage angulaire ou le déplacement latéral par rapport au propre véhicule automobile, et
- un générateur de signaux engendrant un signal caractéristique de la vitesse pour une roue au moins du véhicule automobile, l'unité de commande électronique (ECU) étant reliée à ces générateurs de signaux, et
- au moins un appareil de commande influant sur le comportement de marche du véhicule automobile, appareil qui est également relié à l'unité de commande électronique (ECU), afin de transmettre des signaux de sortie déduits du comportement de circulation du véhicule automobile se trouvant devant le propre véhicule automobile, le système déterminant dans l'unité de commande électronique (ECU) des valeurs caractéristiques présentant des limites floues pour au moins deux environnements routiers différents (circulation en ville, route de campagne, autoroute) afin de distinguer la nature de la route sur laquelle se déplace le propre véhicule automobile, une grandeur influant sur la valeur caractéristique respective étant la "vitesse environnante" déterminée à partir des vitesses des objets saisis dans l'espace devant le propre véhicule automobile, de préférence obtenue par le calcul d'une valeur moyenne.

2. Système selon la revendication précédente, dans lequel la valeur "vitesse environnante" est calculée par l'unité de commande électronique (ECU) par approximation de la vitesse réelle du propre véhicule automobile à partir d'une valeur momentanée, calcul réalisé en utilisant une fonction prédéterminée, une approximation étant de préférence effectuée à partir d'une valeur plus élevée que la valeur momentanée de la vitesse réelle en appliquant un premier taux de vitesse, et une approximation étant effectuée à partir d'une valeur moins élevée que la valeur momentanée de la vitesse réelle en appliquant un deuxième taux de vitesse, de préférence substantiellement plus élevé que le premier taux de vitesse.

3. Système selon l'une des revendications précédentes, dans lequel la valeur "vitesse environnante" est calculée par l'unité de commande électronique (ECU) par approximation de la vitesse réelle du propre véhicule automobile à partir d'une valeur momentanée, calcul réalisé en utilisant une fonction prédéterminée, une augmentation de la valeur "vitesse environnante" étant effectuée en appliquant un troisième taux de vitesse de préférence substantiellement plus élevé que le deuxième taux de vitesse dans le cas où au moins deux autres objets qui roulent sensiblement côte à côte se trouvent devant le propre véhicule automobile et que le propre véhicule automobile roule avec une vitesse réelle située dans la plage "route de campagne".

4. Système selon l'une des revendications précédentes, dans lequel la valeur "vitesse environnante" est calculée par l'unité de commande électronique (ECU) par approximation par paliers d'une valeur limite inférieure à partir d'une valeur momentanée, cette valeur "vitesse environnante" étant réduite à la valeur de seuil en appliquant un quatrième taux de vitesse, qui est de préférence substantiellement plus élevé que le troisième taux de vitesse, si une accélération transversale dépassant une valeur de seuil résultait de la valeur "vitesse environnante" et du taux de giration momentané du propre véhicule automobile.

5. Système selon l'une des revendications précédentes, dans lequel la valeur "vitesse environnante" est limitée dans l'unité de commande électronique (ECU) à un multiple prédéterminé de la vitesse désirée du propre véhicule automobile.

6. Système selon l'une des revendications précédentes, dans lequel la valeur "vitesse environnante" est limitée dans l'unité de commande électronique (ECU) à une valeur de seuil inférieure prédéterminée et à une valeur de seuil supérieure prédéterminée.

7. Système selon l'une des revendications précédentes, dans lequel le tracé de courbure est dérivé dans l'unité de commande électronique (ECU) par rapport au parcours, et dans lequel la valeur de "vitesse environnante" est diminuée en fonction du résultat en appliquant un taux prédéterminé dépendant de préférence de la vitesse du propre véhicule automobile et/ou de la distance du véhicule automobile cible.

8. Système selon l'une des revendications précédentes, dans lequel le tracé de courbure est dérivé dans l'unité de commande électronique (ECU) par rapport au parcours, et dans lequel, lors d'une suite de changements de virages le long d'un parcours déterminé, la valeur "vitesse environnante" est diminuée en fonction du résultat de la dérivée en appliquant un taux prédéterminé dépendant de préférence de la vitesse du propre véhicule automobile et/ou de la distance du véhicule automobile cible.

9. Système selon l'une des revendications précédentes, dans lequel le tracé de courbure est dérivé dans l'unité de commande électronique (ECU) par rapport au parcours, et dans lequel, lors d'une suite de longs tronçons rectilignes d'un certain parcours, la valeur "vitesse environnante" est augmentée en fonction du résultat de la dérivée en appliquant un taux prédéterminé dépendant de préférence de la vitesse du propre véhicule automobile et/ou de la distance du véhicule automobile cible.

10. Système selon l'une des revendications précédentes, dans lequel le tracé de courbure est dérivé dans l'unité de commande électronique (ECU) par rapport au parcours, et dans lequel, lors des virages en S (deux tronçons de virage contraires sans connexion rectiligne ou avec une telle connexion mais relativement courte), la valeur "vitesse environnante" est diminuée en fonction du résultat de la dérivée en appliquant un taux élevé.

11. Système selon l'une des revendications précédentes, dans lequel l'unité de commande électronique (ECU) diminue la valeur "vitesse environnante" d'une part dynamique en appliquant un taux élevé si un signal qui représente un taux de giration dépassant une valeur prédéterminée est présent, cette part dynamique étant restituée en cas d'absence du signal du taux de giration dépassant une valeur prédéterminée.

12. Système selon la revendication précédente, dans lequel la part dynamique n'est soustraite, respectivement restituée, dans l'unité de commande électronique (ECU) de la vitesse environnante que pour les virages à droite en cas de circulation à droite, ou, respectivement, que pour les virages à gauche en cas de circulation à gauche.

13. Système selon l'une des revendications précédentes, dans lequel la part dynamique est modifiée dans l'unité de commande électronique (ECU) en fonction de la vitesse du propre véhicule automobile et/ou de la distance du véhicule automobile cible.
